(19) Europäisches Patentamt
European Patent Office
Office européen des brevets

(11) **EP 3 489 548 B1**

(12) **EUROPÄISCHE PATENTSCHRIFT**

(45) Veröffentlichungstag und Bekanntmachung des Hinweises auf die Patenterteilung:
**05.01.2022  Patentblatt 2022/01**

(51) Int Cl.:
**F16H 57/08** *(2006.01)*      **F16H 1/28** *(2006.01)*
**F16H 57/04** *(2010.01)*      *F02C 7/36* *(2006.01)*

(21) Anmeldenummer: **18206982.3**

(22) Anmeldetag: **19.11.2018**

(54) **PLANETENGETRIEBE**

PLANETARY GEAR UNIT

TRAIN ÉPICYCLOÏDAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2017   DE 102017127874**
**24.11.2017   DE 102017127876**

(43) Veröffentlichungstag der Anmeldung:
**29.05.2019   Patentblatt 2019/22**

(73) Patentinhaber:
• **Rolls-Royce Deutschland Ltd & Co KG**
**15827 Blankenfelde-Mahlow (DE)**
• **Rolls-Royce plc**
**London N1 9FX (GB)**

(72) Erfinder:
• **CAMPBELL, Christopher**
**15827 Blankenfelde-Mahlow (DE)**
• **SPRUCE, Mark**
**Derby, Derbyshire DE24 8BJ (GB)**
• **GORENZ, Paul**
**15827 Blankenfelde-Mahlow (DE)**
• **WAGNER, Frank**
**15827 Blankenfelde-Mahlow (DE)**
• **NIQUE, Michael**
**15827 Blankenfelde-Mahlow (DE)**
• **ASHMORE, Dr. Daren**
**Derby, Derbyshire DE24 8BJ (GB)**

(74) Vertreter: **Müller, Wolfram Hubertus**
**Patentanwalt**
**Teltower Damm 15**
**14169 Berlin (DE)**

(56) Entgegenhaltungen:
**EP-A1- 0 188 616          WO-A1-2013/106879**
**DE-A1-102015 221 633**

**Beschreibung**

Die Erfindung betrifft ein Planetengetriebe gemäß dem Oberbegriff des Patentanspruchs 1.

Planetengetriebe sind allgemein bekannt. Sie werden unter anderem in Getriebefan-Triebwerken eingesetzt, um eine Untersetzung zwischen einer mit einer Turbine gekoppelten Turbinenwelle und einer mit einem Fan gekoppelten Fanwelle bereitzustellen.

Die US 2015/0300255 A1 beschreibt ein Planetengetriebe eines Getriebefan-Triebwerks, bei dem in Planetenrädern, die von einem Sonnenrad angetrieben werden und in einem feststehenden Hohlrad umlaufen, jeweils Planeten-Gleitlagerstifte angeordnet sind, die ein geschmiertes Gleitlager zum Planetenrad bilden. Die Planeten-Gleitlagerstifte sind mit einem Drehmomentträger verbunden, der mit einer Fanwelle gekoppelt ist. Des Weiteren ist offenbart, dass die Planeten-Gleitlagerstifte an ihren Enden mit Aussparungen versehen sein können.

In Getriebefan-Triebwerken sind Planetengetriebe sehr großen Zentrifugalkräften und Drehmomenten ausgesetzt, die den Planeten-Gleitlagerstift und das Planetenrad verformen und den Schmierfilm im Gleitlager zwischen diesen beiden Elementen beeinflussen können, wodurch die Funktionalität des Gleitlagers beeinträchtigt wird. Insbesondere verhält es sich so, dass der an seinen Enden in Trägerplatten fixierte Planeten-Gleitlagerstift durch die auftretenden Kräfte Biegungen ausgesetzt ist, durch die die Schmierfilmdicke in der Mitte des Planeten-Gleitlagerstifts zunimmt und an den Enden des Planeten-Gleitlagerstifts abnimmt, was an den Enden des Planeten-Gleitlagerstifts zu einem erhöhten Schmierfilmdruck und der Gefahr eines Metall-Metall-Kontaktes zwischen dem Planeten-Gleitlagerstift und dem Planetenrad führt.

Es ist daher anzustreben, das Gleitlager zwischen dem Planetenrad und dem Planeten-Gleitlagerstift dahingehend auszubilden, dass an den Enden des Gleitlagers kein überhöhter Schmierfilmdruck auftritt.

Die DE 10 2015 221 633 A1 beschreibt ein Planetengetriebe mit Planetenbolzen, die formschlüssig an einem Planetenträger fixiert sind. Auf einem Planetenbolzen ist jeweils mittels eines Gleitlagers ein Planetenrad gelagert. Die das Gleitlager ausbildende Fläche des Planetenbolzens ist dabei sphärisch gewölbt. Das Planetenrad weist an seiner Außenseite eine Verzahnung auf, die mit einem Hohlrad des Planetengetriebes in Eingriff steht.

Der vorliegenden Erfindung liegt die Aufgabe zu Grunde, ein Planetengetriebe sowie ein Planetenrad bereitzustellen, die eine effektive Ausbildung des Gleitlagers zwischen dem Planetenrad und einem im Planetenrad angeordneten Planeten-Gleitlagerstift ermöglichen.

Diese Aufgabe wird durch einen Planetengetriebe mit den Merkmalen des Patentanspruchs 1 gelöst. Ausgestaltungen der Erfindung sind in den abhängigen Ansprüchen angegeben.

Danach betrachtet die Erfindung ein Planetengetriebe, das ein Sonnenrad, eine Mehrzahl von Planetenrädern, ein Hohlrad und eine Mehrzahl von Planeten-Gleitlagerstiften umfasst. Das Sonnenrad rotiert um eine Drehachse des Planetengetriebes und wird von einer Sonnenwelle angetrieben. Die Drehachse des Planetengetriebes definiert dabei eine axiale Richtung des Planetengetriebes. Die Planetenräder werden von dem Sonnenrad angetrieben und stehen mit dem Hohlrad in Eingriff. Jedes Planetenrad weist eine axial vordere Stirnseite und eine axial hintere Stirnseite auf. Ein Planeten-Gleitlagerstift ist jeweils in einer axialen Öffnung eines Planetenrads angeordnet. Der Planeten-Gleitlagerstift und das Planetenrad bilden ein geschmiertes Gleitlager, wobei die aneinander angrenzende Kontaktflächen des Gleitlagers durch einen Gleitlagerspalt voneinander getrennt sind.

Die vorliegende Erfindung sieht vor, dass jedes Planetenrad an seiner axial vorderen Stirnseite und/oder an seiner axial hinteren Stirnseite eine Aussparung ausbildet, die sich ausgehend von der Stirnseite innerhalb des Planetenrads erstreckt, und dass die Planeten-Gleitlagerstifte an ihrer Anlagefläche jeweils eine Balligkeit in dem Sinne ausbilden, dass ihr Außendurchmesser von einem maximalen Außendurchmesser zu mindestens einem axialen Ende der Anlagefläche hin abnimmt und an dem axialen Ende ein Minimum aufweist. Die mit einer Balligkeit ausgebildete Anlagefläche des Planeten-Gleitlagerstifts bildet dabei eine Kontaktfläche des Gleitlagers, das der Planeten-Gleitlagerstift mit dem Planetenrad bildet.

Die erfindungsgemäße Lösung beruht zum einen auf der Idee, die Steifigkeit des Planetenrads dadurch zu beeinflussen und zu reduzieren, dass an der axial vorderen Stirnseite und/oder an der axial hinteren Stirnseite des Planetenrads eine Materialaussparung realisiert wird. Dies ermöglicht, dass bei hohen auftretenden Kräften an den Enden des Gleitlagers die durch das Planetenrad gebildete Kontaktfläche des Gleitlagers sich an seinen Enden flexibel verformen kann, wodurch ein überhöhter Schmierfilmdruck verhindert wird. Die Druckverteilung im Gleitlager wird dabei von den Enden des Gleitlagers weg zur Mitte hin verlagert. Die Erfindung stellt darüber hinaus den weiteren Vorteil bereit, dass durch die Materialaussparung das Planetenrad eine reduzierte Masse aufweist und dadurch die Lagerbelastung verringert wird. Die Erfindung beeinflusst somit in positiver Weise die Steifigkeit des Planetenrads und reduziert gleichzeitig dessen Masse.

Die Bereitstellung einer Aussparung an mindestens einer Stirnseite des Planetenrads kann dabei zu einer Gewichtseinsparung des Planetenrads von beispielsweise bis zu 10 % führen. Die reduzierte Masse des Planetenrads kann auch zu einer vorteilhaften Gewichtsreduktion von benachbarten Komponenten des Flugtriebwerks führen, da diese aufgrund der geringeren Belastung ebenfalls leichter ausgeführt werden können.

Über die Form der Aussparungen kann der Grad der Steifigkeit bzw. Flexibilität des Planetenrads entlang des Gleitlagers eingestellt werden, um eine bestmögliche Gleitlagerfunktionalität über sämtliche Betriebszustände des Flugtriebwerk bereitstellen zu können.

Die erfindungsgemäße Lösung beruht zum anderen auf der Idee, den Planeten-Gleitlagerstift nicht zylindrisch auszubilden, sondern mit einer Balligkeit zu versehen, die dazu führt, dass der Außendurchmesser des Planeten-Gleitlagerstifts an mindestens einem axialen Ende der Anlagefläche minimal ist. Hierdurch wird an mindestens einem Ende der Anlagefläche ein vergrößerter Gleitlagerspalt und damit einhergehend eine vergrößerte Schmierfilmdicke bereitgestellt. Dies führt dazu, dass bei im Betrieb auftretenden Deformationen und Schwingungen an den Enden der Anlagefläche, die auf Zentrifugalkräfte und eingeleitete Drehmomente zurückzuführen sind, die Schmierfilmdicke an mindestens einem axialen Ende der Anlagefläche ausreichend groß bleibt, um einen überhöhten Schmierfilmdruck und die Gefahr eines Metall-Metall-Kontaktes zwischen dem Planeten-Gleitlagerstift und dem Planetenrad zu vermeiden.

Das Gleitlager wird insofern optimiert, als auch an den axialen Enden des Gleitlagers im Betrieb parallel ausgerichtete Kontaktflächen bereitgestellt werden. Die Schmierfilmdicke weist geringere Dickenänderungen über die axiale Länge auf. Die genannten Vorteile werden dabei ohne eine Erhöhung der Wanddicke des Planeten-Gleitlagerstifts erreicht. Vielmehr kann sogar eine gewisse Gewichtsersparnis erreicht werden, da die Balligkeit der Anlagefläche durch eine Materialentfernung zu den axialen Enden der Anlagefläche hin erreicht werden kann.

Durch die Kombination einer Aussparung an der axial vorderen Stirnseite und/oder an der axial hinteren Stirnseite des Planetenrads mit einer Balligkeit des Planeten-Gleitlagerstifts wird erreicht, dass einerseits das Planetenrad eine reduzierte Masse aufweist und dadurch die Lagerbelastung verringert und andererseits trotz der Möglichkeit einer flexiblen Verformung des Planetenrads an seinen axialen Enden sicher verhindert wird, dass das Planetenrad an seinen Enden in Metall-Metall-Kontakt mit dem Planeten-Gleitlagerstift gerät, da dies durch die Balligkeit des Planeten-Gleitlagerstift gerade verhindert wird. Vielmehr wird ein parallel ausgeführter Gleitlagerspalt ohne Knotenlagen und damit ein besseres Tragverhalten zwischen dem Planeten-Gleitlagerstift und dem Planetenrad bereitgestellt.

Eine Ausgestaltung der Erfindung sieht vor, dass die radiale Dicke der Aussparung mit zunehmendem Abstand zur Stirnseite abnimmt. Die Aussparung läuft somit im Inneren des Planetenrads konvergent zusammen und ist im Längsschnitt beispielsweise keilförmig oder parabelförmig ausgebildet. Alternativ kann vorgesehen sein, dass die Aussparung zylindrisch, d. h. im Längsschnitt rechteckig ausgebildet ist.

Eine weitere Ausgestaltung der Erfindung sieht vor, dass das Planetenrad eine äußere Mantelfläche, die mindestens eine Verzahnung ausbildet, und eine innere Mantelfläche aufweist. Die äußere Mantelfläche und die innere Mantelfläche bilden dabei die beiden Mantelflächen eines zumindest näherungsweise hohlzylindrischen Planetenrads. Die innere Mantelfläche stellt dabei eine der Kontaktflächen des Gleitlagers zum Planeten-Gleitlagerstift dar.

Dabei weist das Planetenrad an mindestens einer Stirnseite einen äußeren Stirnseitenbereich und einen inneren Stirnseitenbereich auf. Der äußere Stirnseitenbereich erstreckt sich an der Stirnseite von der Aussparung bis zur äußeren Mantelfläche, wobei der äußere Stirnseitenbereich eine radial innere Stirnseitenkante zur Aussparung und eine radial äußere Stirnseitenkante zur äußeren Mantelfläche bildet. Der radiale Abstand zwischen der radial inneren Stirnseitenkante und der radial äußeren Stirnseitenkante gibt dabei die radiale Dicke des äußeren Stirnseitenbereichs an.

Der innere Stirnseitenbereich erstreckt sich an der Stirnseite von der Aussparung bis zur inneren Mantelfläche, wobei der innere Stirnseitenbereich eine radial äußere Stirnseitenkante zur Aussparung und eine radial innere Stirnseitenkante zur inneren Mantelfläche bildet. Der radiale Abstand zwischen der radial inneren Stirnseitenkante und der radial äußeren Stirnseitenkante gibt dabei die radiale Dicke des inneren Stirnseitenbereichs an. Die radiale Dicke der Aussparung an der Stirnseite ist definiert als der radiale Abstand zwischen der radial inneren Stirnseitenkante des äußeren Stirnseitenbereichs und der radial äußeren Stirnseitenkante des inneren Stirnseitenbereichs.

Es wird darauf hingewiesen, dass die radial äußere Stirnseitenkante und die radial innere Stirnseitenkante des äußeren Stirnseitenbereichs und/oder die radial äußere Stirnseitenkante und die radial innere Stirnseitenkante des inneren Stirnseitenbereichs zusammenfallen können und für diesen Fall eine gemeinsame Kante bilden. Wenn die radial äußere Stirnseitenkante und die radial innere Stirnseitenkante des äußeren Stirnseitenbereichs zusammenfallen, erstreckt sich die Aussparung an der Stirnseite unmittelbar bis zur äußeren Mantelfläche des Planetenrads. Wenn die radial äußere Stirnseitenkante und die radial innere Stirnseitenkante des inneren Stirnseitenbereichs zusammenfallen, erstreckt sich die Aussparung an der Stirnseite unmittelbar bis zur inneren Mantelfläche des Planetenrads.

Eine weitere Ausgestaltung der Erfindung sieht vor, dass die radial innere Begrenzung der Aussparung jedenfalls angrenzend an den inneren Stirnseitenbereich einen Winkel $\alpha$ zur axialen Richtung bildet, der zwischen 0° und 45° liegt. Ebenso kann vorgesehen sein, dass die radial äußere Begrenzung der Aussparung jedenfalls angrenzend an den äußeren Stirnseitenbereich einen Winkel $\beta$ zur axialen Richtung bildet, der zwischen 0° und 45° liegt. Es kann vorgesehen sein, dass der Winkel $\alpha$ zwischen 2° und 35° und der Winkel $\beta$ zwischen 0° und 35° liegt.

Die äußere Mantelfläche und die innere Mantelfläche weisen jeweils eine axiale Länge auf, die identisch oder unterschiedlich sein kann. Die Dicke des Planetenrads ist definiert durch den radialen Abstand zwischen seiner inneren Mantelfläche und der Zahnfußfläche der Verzahnung der äußeren Mantelfläche, die eine Zylinderfläche ist. Es kann vorgesehen sein, dass das Verhältnis der radialen Dicke der Aussparung an der Stirnseite zur Dicke des Planetenrads im Bereich zwischen 0,1 und 0,9 liegt. Beispielsweise liegt das genannte Verhältnis im Bereich zwischen 0,2 und 0,8.

Weiter kann vorgesehen sein, dass das Verhältnis der radialen Dicke des inneren Stirnseitenbereichs zur Dicke des Planetenrads im Bereich zwischen 0,01 und 0,6 liegt. Beispielsweise liegt das genannte Verhältnis im Bereich zwischen 0,01 und 0,5.

Weiter kann vorgesehen sein, dass das Verhältnis der axialen Länge der Aussparung (die der Tiefe der Aussparung entspricht) zur halben axialen Länge der inneren Mantelfläche im Bereich zwischen 0,01 und 0,9 liegt. Die axiale Länge der Aussparung erstreckt sich dabei vom inneren Stirnseitenbereich der Stirnseite bis zu dem Punkt oder Bereich der Aussparung, der den größten axialen Abstand von der Stirnseite aufweist. Beispielsweise liegt das genannte Verhältnis im Bereich zwischen 0,2 und 0,85.

Wie bereits erwähnt, kann vorgesehen sein, dass die axiale Länge der äußeren Mantelfläche ungleich der axialen Länge der inneren Mantelfläche ist. Dabei kann die äußere Mantelfläche eine größere oder eine geringere axiale Länge als die innere Mantelfläche aufweisen. Alternativ kann vorgesehen sein, dass die axiale Länge der äußeren Mantelfläche gleich der axialen Länge der inneren Mantelfläche ist.

Eine weitere Ausgestaltung der Erfindung sieht vor, dass die Aussparung an ihrem im Planetenrad ausgebildeten Ende durch eine sich im Wesentlichen radial erstreckende Fläche gebildet ist, die durch abgerundete Ecken in eine radial äußere Begrenzung und in eine radial innere Begrenzung der Aussparung übergeht. Eine hierzu alternative Ausgestaltung sieht vor, dass die Aussparung an ihrem im Planetenrad ausgebildeten Ende im Längsschnitt kreisförmig oder in anderer Weise konkav (bezogen auf die im Material ausgebildete Krümmung) ausgebildet ist.

Gemäß einer weiteren Ausgestaltung der Erfindung ist vorgesehen, dass die radial äußere Begrenzung und/oder die radial innere Begrenzung der Aussparung, die sich ausgehend von der Stirnseite zum im Planetenrad ausgebildeten Ende der Aussparung erstrecken, im Längsschnitt gerade, kreisförmig oder parabelförmig ausgebildet sind. Grundsätzlich kann dabei eine beliebige Formgebung der radial äußeren Begrenzung und der radial inneren Begrenzung der Aussparung gegeben sein. Auch kann vorgesehen sein, dass sich die Formgebung der radial äußeren Begrenzung und der radial inneren Begrenzung unterscheiden.

Gemäß der vorliegenden Erfindung kann vorgesehen sein, dass die Aussparung sich in Umfangsrichtung des Planetenrads um 360° erstreckt, also in Umfangsrichtung durchgehend ausgebildet ist, wobei das Planetenrad als Rotationskörper gebildet ist. Alternativ kann vorgesehen sein, dass mehrere Aussparungen vorgesehen sind, die sich jeweils im Umfangsrichtung um einen Winkel kleiner als 180° erstrecken. Solche Aussparungen sind dabei bevorzugt symmetrisch zueinander angeordnet, d.h. sie verteilen sich gleichmäßig in Umfangsrichtung. Beispielsweise kann alternativ vorgesehen sein, dass n Aussparungen vorgesehen sind, die sich jeweils in Umfangsrichtung um einen Winkelbereich kleiner 360°/n erstrecken und die durch Stege in Umfangsrichtung voneinander getrennt sind. Dabei bezeichnet n eine natürliche Zahl.

Die Verzahnung der äußeren Mantelfläche ist beispielsweise als Doppelschrägverzahnung ausgebildet. Alternativ kann beispielsweise eine einfache Verzahnung (z.B. eine Geradverzahnung) vorgesehen sein.

Die Erfindung sieht vor, dass die Planetenräder an mindestens einer Stirnseite eine Aussparung ausbilden. Gemäß einer Ausgestaltung der Erfindung bilden die Planetenräder sowohl an der axial vorderen Stirnseite als auch an der axial hinteren Stirnseite eine Aussparung aus. Dabei kann vorgesehen sein, dass die beiden Aussparungen symmetrisch bezogen auf die axiale Mitte des Planetenrads ausgebildet sind, wobei die axiale Mitte durch den halben axialen Abstand zwischen den Stirnseiten des Planetenrads definiert ist. Das Planetenrad ist somit symmetrisch hinsichtlich seiner axialen Mitte.

In alternativen Ausgestaltungen der Erfindung kann dagegen vorgesehen sein, dass die an den beiden Stirnseiten ausgebildeten Aussparungen asymmetrisch bezogen auf die axiale Mitte des Planetenrads ausgebildet sind.

Gemäß einer Ausgestaltung der Erfindung sind die Planeten-Gleitlagerstifte mit einem Drehmomentträger gekoppelt, wobei der Drehmomentträger bei drehendem Sonnenrad und fest angeordnetem Hohlrad mit untersetzter Drehzahl um die Drehachse des Planetengetriebes rotiert. Der Drehmomentträger ist dabei beispielsweise mit einer Fanwelle gekoppelt. Die Planetenräder rotieren sowohl um ihre eigene Achse als auch um die Drehachse des Planetengetriebes, dies jeweils mit unterschiedlichen Drehzahlen.

Eine Ausgestaltung der Erfindung sieht dabei vor, dass die Planeten-Gleitlagerstifte innen hohl und dazu ausgebildet sind, einen Trägerstift eines Drehmomentträgers aufzunehmen, wobei über den Trägerstift eine Drehmomentübertragung erfolgt.

Alternativ kann vorgesehen sein, dass die Planeten-Gleitlagerstifte fest mit einer vorderen Trägerplatte und mit einer hinteren Trägerplatte verbunden sind, wobei die vordere Trägerplatte zur Drehmomentübertragung mit dem Drehmomentträger gekoppelt ist. Die Planeten-Gleitlagerstifte können mit den Trägerplatten dabei beispielsweise verschweißt oder verschraubt sein.

Hinsichtlich der Ausbildung der Planeten-Gleitlagerstifte mit einer Balligkeit ist gemäß einer Ausführungsvariante vorgesehen, dass die Planeten-Gleitlagerstifte an ihrer Anlagefläche eine Balligkeit dahingehend ausbilden, dass ihr Außendurchmesser zu beiden axialen Enden der Anlagefläche hin abnimmt und an beiden axialen Enden ein Minimum aufweist. Insbesondere kann vorgesehen sein, dass der Planeten-Gleitlagerstift minimale Außendurchmesser an den beiden axialen Enden der Anlagefläche und den maximalen Außendurchmesser zwischen den axialen Enden aufweist, wobei die minimalen Außendurchmesser an den beiden Enden identisch oder unterschiedlich sein können.

Der Außendurchmesser ist gemäß dieser Ausführungsvariante somit an beiden axialen Enden minimal, d. h. er nimmt zu beiden axialen Enden ab. Damit ist gerade nicht vorgesehen, dass der Außendurchmesser angrenzend an die axialen Enden konstant verläuft, für welchen Fall die axialen Enden zylindrisch ausgebildet wären. Alternativ weist der Außendurchmesser an dem einen axialen Ende der Anlagefläche einen maximalen Außendurchmesser auf, wobei sich der Außendurchmesser zu dem anderen axialen Ende hin kontinuierlich bis zu einem Minimum verringert.

Dementsprechend kann vorgesehen sein, dass die Differenz zwischen dem maximalen Außendurchmesser und dem Außendurchmesser an einer betrachteten axialen Position des Planeten-Gleitlagerstifts zu beiden axialen Enden oder zu einem axialen Ende des Planeten-Gleitlagerstifts kontinuierlich zunimmt. Dies bedeutet für den Gleitlagerspalt, dass dieser - bei einer Betrachtung des Zusammenbauzustands ohne Last und im nichtrotierenden Zustand - ebenfalls zu den axialen Enden des Planeten-Gleitlagerstifts zunimmt. Dabei wird angenommen, dass die Kontaktfläche des Planetenrads, die die andere Fläche des Gleitlagers bildet, zylindrisch ausgebildet ist. Im Betrieb bzw. unter Last schmiegt sich das Planetenrad dagegen an den Planeten-Gleitlagerstift, so dass ein gleichmäßiger Spalt über die axiale Länge entsteht.

Es kann vorgesehen sein, dass die Anlagefläche des Planeten-Gleitlagerstifts im Längsschnitt eine erste konvexe Kurve ausbildet, die sich zwischen dem Maximum des Außendurchmessers und dem vorderen axialen Ende der Anlagefläche erstreckt, und eine zweite konvexe Kurve ausbildet, die sich zwischen dem Maximum des Außendurchmessers und dem hinteren axialen Ende der Anlagefläche erstreckt. Dabei kann die konvexe Kurve grundsätzlich in beliebiger Weise geformt sein. Ausführungsbeispiele sehen vor, dass die erste Kurve und/oder die zweite Kurve als Kreisbogen ausgebildet ist, dass die erste Kurve und/oder die zweite Kurve parabelförmig ausgebildet ist, oder dass die erste Kurve und/oder die zweite Kurve geradlinig ausgebildet ist. Im letzten Fall läuft die Anlagefläche des Planeten-Gleitlagerstifts zu seinen axialen Enden konisch zusammen. Auch kann vorgesehen sein, dass die erste Kurve und/oder die zweite Kurve aus mehreren unterschiedlich gekrümmten Kurvenstücken zusammengesetzt ist. Dabei kann weiter vorgesehen sein, dass eines oder mehrere dieser Kurvenstücke geradlinig/linear ausgebildet sind.

Das Maximum des Außendurchmessers des Planeten-Gleitlagerstifts wird gemäß der betrachteten Ausführungsvariante in einer Ausgestaltung durch eine Umfangslinie gebildet (die sich in Umfangsrichtung des Planeten-Gleitlagerstifts erstreckt). Im Längsschnitt des Planeten-Gleitlagerstifts bildet das Maximum somit einen Punkt. Dies bedeutet, dass die genannte erste Kurve und die genannte zweite Kurve stetig ineinander übergehen, somit die Anlagefläche durch eine einzige gekrümmte Kurve gebildet sein kann (die ins Ausführungsvarianten aus unterschiedlich gekrümmten Kurvenstücken zusammengesetzt sein kann). Dementsprechend kann in Ausgestaltungen vorgesehen sein, dass die Anlagefläche des Planeten-Gleitlagerstifts vollständig kreisförmig oder parabelförmig mit einem Maximum des Außendurchmessers in der axialen Mitte des Planeten-Gleitlagerstifts oder alternativ außerhalb der axialen Mitte des Planeten-Gleitlagerstifts ausgebildet ist.

Es kann alternativ vorgesehen sein, dass das Maximum des Außendurchmessers des Planeten-Gleitlagerstifts durch einen zylindrischen Bereich konstanten Außendurchmessers gebildet ist, der sich über eine definierte axiale Länge erstreckt. Diese axiale Länge ist gemäß einer Ausführungsvariante derart bemessen, dass das Verhältnis der axialen Länge des zylindrischen Bereichs zur axialen Gesamtlänge der Anlagefläche zwischen 0 und 0,75 liegt. Ein solcher zylindrischer Plateaubereich kann dabei mittig oder außermittig ausgebildet sein. An ihn können sich beispielsweise im Längsschnitt kreisförmige, parabelförmige oder gradlinige Flächen anschließen.

Weiter kann vorgesehen sein, dass das Verhältnis der halben Differenz zwischen dem maximalen Außendurchmesser und dem minimalen Außendurchmesser des Planeten-Gleitlagerstifts zum maximalen Außendurchmesser zwischen 0,00005 und 0,005 liegt. Genannte halben Differenz gibt dabei gerade die Balligkeit des Planeten-Gleitlagerstifts an. Sofern der Planeten-Gleitlagerstift unterschiedliche minimale Außendurchmesser an den beiden axialen Enden der Anlagefläche aufweist, gilt das genannte Verhältnis jeweils im Hinblick auf den maximalen Außendurchmesser und den minimalen Außendurchmesser an dem jeweils betrachteten axialen Ende.

Weiter kann vorgesehen sein, dass der Planeten-Gleitlagerstift in seiner axialen Mitte (d.h. mittig zwischen dem axial vorderen Ende und dem axial hinteren Ende der Anlagefläche) ein Maximum seines Außendurchmessers aufweist. Der Planeten-Gleitlagerstift ist spiegelsymmetrisch hinsichtlich seiner axialen Mitte ausgebildet. Dies ist jedoch nicht notwendigerweise der Fall. Alternativ kann vorgesehen sein, dass der Planeten-Gleitlagerstift außerhalb seiner axialen Mitte ein Maximum seines Außendurchmessers aufweist und dementsprechend asymmetrisch hinsichtlich seiner axialen Mitte ausgebildet ist.

Weiter kann vorgesehen sein, dass der Planeten-Gleitlagerstift als Rotationskörper ausgebildet ist, d. h. er ist rotationssymmetrisch bezüglich der Längsachse des Gleitlagerstifts ausgebildet. Dies ist jedoch nicht notwendigerweise der Fall. Gemäß alternativen Ausgestaltungen weist der Planeten-Gleitlagerstift eine ballig ausgebildete Anlagefläche lediglich über einen Umfangswinkel kleiner 360°, insbesondere im Bereich von ±60° um den nominell belasteten Bereich auf. Das ballige Profil des Planeten-Gleitlagerstifts erstreckt sich somit nicht über den gesamten Umfang des Planeten-Gleitlagerstifts, sondern in Umfangsrichtung nur über einen definierten Winkelbereich. Der beschriebene positive Einfluss auf das Gleitlager ist auch bei einer solchen Ausgestaltung gegeben. Zusätzlich wird der Ölverbrauch für die Schmierung reduziert, da eine vergrößerte Schmierfilmdicke an den axialen Enden nicht über den gesamten Umfang bereitgestellt wird.

Sofern der Planeten-Gleitlagerstift rotationssymmetrisch ausgebildet ist, ist der Außendurchmesser an einer betrachteten axialen Position für alle Punkte einer Umfangslinie der gleiche. Sofern der Planeten-Gleitlagerstift nicht rotationssymmetrisch ausgebildet ist, wird als Außendurchmesser einer betrachteten axialen Position im Sinne der vorliegenden Erfindung der größte Außendurchmesser betrachtet.

Der Planeten-Gleitlagerstift kann ein axial vorderes Ende und ein axial hinteres Ende aufweisen, die axial beabstandet zu dem axial vorderen Ende und dem axial hinteren Ende der Anlagefläche sind, wobei der Planeten-Gleitlagerstift an seinem vorderen axialen Ende mit einer vorderen Trägerplatte und an seinem hinteren axialen Ende mit einer hinteren Trägerplatte verbunden ist. Der Planeten-Gleitlagerstift erstreckt sich somit an beiden Enden jenseits der Anlagefläche und ist dort jeweils mit einer Trägerplatte verbunden. Es ist also zu unterscheiden zwischen den axialen Enden der Anlagefläche und den axialen Enden des Planeten-Gleitlagerstifts.

Es kann vorgesehen sein, dass die Planeten-Gleitlagerstifte innenseitig einer axiale Öffnung aufweisen und dazu ausgebildet sind, einen Trägerstift eines Drehmomentträgers darin aufzunehmen.

Es kann weiter vorgesehen sein, dass die Planeten-Gleitlagerstifte mit einem Drehmomentträger gekoppelt sind, wobei der Drehmomentträger bei drehendem Sonnenrad und fest angeordnetem Hohlrad mit untersetzter Drehzahl um die Drehachse des Planetengetriebes rotiert. Der Drehmomentträger ist dabei beispielsweise mit einer Fanwelle gekoppelt. Die Planetenräder rotieren sowohl um ihre eigene Achse als auch um die Drehachse des Planetengetriebes, dies jeweils mit unterschiedlichen Drehzahlen.

Eine Ausgestaltung der Erfindung sieht dabei vor, dass die Planeten-Gleitlagerstifte innen hohl und dazu ausgebildet sind, einen Trägerstift eines Drehmomentträgers aufzunehmen, wobei über den Trägerstift eine Drehmomentübertragung erfolgt.

Alternativ kann vorgesehen sein, dass die Planeten-Gleitlagerstifte fest mit einer vorderen Trägerplatte und mit einer hinteren Trägerplatte verbunden sind, wobei die vordere Trägerplatte zur Drehmomentübertragung mit dem Drehmomentträger gekoppelt ist. Die Planeten-Gleitlagerstifte können mit den Trägerplatten dabei beispielsweise verschweißt oder verschraubt sein.

Der Planeten-Gleitlagerstift der vorliegenden Erfindung weist eine ballig ausgebildete außenseitigen Anlagefläche auf. Der in der Regel hohl, d. h. mit einer axialen Öffnung bzw. Bohrung versehene Planeten-Gleitlagerstift kann dabei an seiner Innenfläche grundsätzlich beliebig ausgebildet sein. Beispielsweise kann der Planeten-Gleitlagerstift innenseitig hohlzylindrisch ausgebildet sein, also eine axiale Öffnung konstanten Durchmessers aufweisen. In anderen Ausführungsvarianten kann vorgesehen sein, dass der Innendurchmesser des Planeten-Gleitlagerstifts entlang seiner axialen Erstreckung variiert.

So kann vorgesehen sein, dass der Innendurchmesser der axialen Bohrung des Planeten-Gleitlagerstifts zwischen dem axial vorderen Ende und dem axial hinteren Ende der Innenfläche variiert und dabei an mindestens einem axialen Ende ein Maximum aufweist. Diese Ausführungsvariante beruht auf der Idee, den Planeten-Gleitlagerstift im Bereich der axialen Bohrung nicht zylindrisch auszubilden, sondern mit einem sich in axialer Richtung verändernden Innendurchmesser zu versehen, wobei der Innendurchmesser an mindestens einem axialen Ende der Innenfläche ein Maximum aufweist. Dementsprechend weist der Planeten-Gleitlagerstift entlang seiner axialen Erstreckung eine Änderung seiner Wanddicke auf, die durch den sich ändernden Durchmesser der axialen Bohrung verursacht ist. Dabei ist die Wanddicke des Planeten-Gleitlagerstifts an mindestens einem axialen Ende der Innenfläche minimal (entsprechend einem maximalen Innendurchmesser der axialen Bohrung). Dabei kann vorgesehen sein, dass die Wanddicke des Planeten-Gleitlagerstifts an beiden axialen Enden der Innenfläche minimal ist. Zwischen den axialen Enden weist der Planeten-Gleitlagerstift eine maximale Wanddicke auf (entsprechend einem minimalen Innendurchmesser der axialen Bohrung). Es wird eine Struktur bereitgestellt, bei der der Planeten-Gleitlagerstift mittig eine größere Wandstärke aufweist als an seinen axialen Enden (oder als an zumindest einem seiner axialen Enden), wodurch die Steifigkeit des Planeten-Gleitlagerstifts erhöht und dementsprechend Belastungen und Abnutzungen reduziert werden.

Dabei kann vorgesehen sein, dass der Planeten-Gleitlagerstift innenseitig derart geformt ist, dass er maximale Innendurchmesser an beiden axialen Enden der Innenfläche und einen minimalen Innendurchmesser zwischen den axialen Enden aufweist, wobei die maximalen Innendurchmesser an den beiden axialen Enden identisch oder unterschiedlich sein können. Der Innendurchmesser ist gemäß dieser Ausführungsvariante somit an beiden axialen Enden maximal. In einer alternativen Ausgestaltung ist der Innendurchmesser an dem einen axialen Ende der Innenfläche minimal, wobei sich der Innendurchmesser zu dem anderen axialen Ende hin kontinuierlich bis zu einem Maximum vergrößert.

Weiter kann vorgesehen sein, dass der Innendurchmesser der axialen Bohrung des Planeten-Gleitlagerstifts zu mindestens einem axialen Ende der Innenfläche stetig zunimmt, wobei der maximale Innendurchmesser erst an der axialen Position des jeweiligen axialen Endes der Innenfläche erreicht ist.

Eine weitere Ausgestaltung dieser Ausführungsvariante sieht vor, dass die Innenfläche des Planeten-Gleitlagerstifts im Längsschnitt eine erste Kurve ausbildet, die sich zwischen dem Minimum und dem vorderen axialen Ende erstreckt, und eine zweite Kurve ausbildet, die sich zwischen dem Minimum und dem hinteren axialen Ende erstreckt. Dabei können die erste und die zweite Kurve grundsätzlich in beliebiger Weise geformt sein. Ausführungsbeispiele sehen vor, dass die erste Kurve und/oder die zweite Kurve als Kreisbogen ausgebildet ist, dass die erste Kurve und/oder die zweite Kurve parabelförmig ausgebildet ist, oder dass die erste Kurve und/oder die zweite Kurve geradlinig ausgebildet ist.

Im letzten Fall läuft ist die axiale Bohrung gemäß einer Ausführungsvariante als doppelt konische Bohrung ausgebildet ist, die sich jeweils von den axialen Enden zur axialen Mitte der Bohrung hin konisch verjüngt.

Das Minimum des Innendurchmessers des Planeten-Gleitlagerstifts wird in einer Ausgestaltung durch eine Umfangslinie gebildet (die sich in Umfangsrichtung des Planeten-Gleitlagerstifts an der Innenfläche erstreckt). Im Längsschnitt des Planeten-Gleitlagerstifts bildet das Minimum somit einen Punkt. Dies bedeutet, dass die genannte erste Kurve und die genannte zweite Kurve unmittelbar ineinander übergehen. Eine alternative Ausgestaltung sieht vor, dass das Minimum des Innendurchmessers des Planeten-Gleitlagerstifts durch einen zylindrischen Bereich konstanten Innendurchmessers gebildet ist, der sich über eine definierte axiale Länge erstreckt. Diese axiale Länge ist gemäß einer Ausführungsvariante derart bemessen, dass das Verhältnis der axialen Länge des zylindrischen Bereichs zur axialen Gesamtlänge der Anlagefläche zwischen 0 und 0,75 liegt.

Ein solcher zylindrischer Plateaubereich kann dabei mittig oder außermittig ausgebildet sein. An ihn können sich beispielsweise im Längsschnitt kreisförmige, parabelförmige oder gradlinige Flächen anschließen.

Es kann weiter vorgesehen sein, dass der Planeten-Gleitlagerstift in seiner axialen Mitte (d.h. mittig zwischen dem axial vorderen Ende und dem axial hinteren Ende der Innenfläche) ein Minimum seines Innendurchmessers aufweist. Der Planeten-Gleitlagerstift ist spiegelsymmetrisch hinsichtlich seiner axialen Mitte ausgebildet. Dies ist jedoch nicht notwendigerweise der Fall. Alternativ kann vorgesehen sein, dass der Planeten-Gleitlagerstift außerhalb seiner axialen Mitte ein Minimum seines Innendurchmessers aufweist und dementsprechend asymmetrisch hinsichtlich seiner axialen Mitte ausgebildet ist.

Die vorliegende Offenbarung betrifft des Weiteren ein Planetenrad für ein Planetengetriebe, das eine axial vordere Stirnseite und eine axial hintere Stirnseite aufweist. Es ist vorgesehen, dass das Planetenrad an seiner axial vorderen Stirnseite und/oder an seiner axial hinteren Stirnseite eine Aussparung ausbildet, die sich ausgehend von der Stirnseite innerhalb des Planetenrads erstreckt. Die in Bezug auf das Planetengetriebe erläuterten vorteilhaften Ausgestaltungen gemäß den Patentansprüchen 2 des 13 gelten auch für das Planetenrad.

Die vorliegende Offenbarung betrifft des Weiteren ein Getriebefan-Triebwerk, das eine Fanstufe, eine Fanwelle, über die die Fanstufe angetrieben wird, und eine Turbinenwelle aufweist. Bei der Turbinenwelle handelt es sich beispielsweise um eine Welle, die mit einer Niederdruckturbine oder einer Mitteldruckturbine des Triebwerks gekoppelt ist. Es ist vorgesehen, dass die Turbinenwelle und die Fanwelle über ein Planetengetriebe gemäß Anspruch 1 gekoppelt sind, wobei die Turbinenwelle die Sonnenwelle bildet, die Planeten-Gleitlagerstifte mit einem Drehmomentträger gekoppelt sind und der Drehmomentträger mit der Fanwelle gekoppelt ist.

Es wird darauf hingewiesen, dass die vorliegende Erfindung bezogen auf ein zylindrisches Koordinatensystem beschrieben ist, das die Koordinaten x, r und φ aufweist. Dabei gibt x die axiale Richtung, r die radiale Richtung und φ den Winkel in Umfangsrichtung an. Die axiale Richtung ist dabei durch die Drehachse des Planetengetriebes definiert, die identisch mit einer Maschinenachse eines Getriebefan-Triebwerks ist, in dem das Planetengetriebe angeordnet ist. Von der x-Achse ausgehend zeigt die radiale Richtung radial nach außen. Begriffe wie "vor", "hinter", "vordere" und "hintere" beziehen sich immer auf die axiale Richtung bzw. die Strömungsrichtung im Triebwerk, in dem das Planetengetriebe angeordnet ist. Begriffe wie "äußere" oder "innere" beziehen sich auf die radiale Richtung.

Die Erfindung wird nachfolgend unter Bezugnahme auf die Figuren der Zeichnung anhand mehrerer Ausführungsbeispiele näher erläutert. Es zeigen:

Figur 1     eine vereinfachte schematische Schnittdarstellung eines Getriebefan-Triebwerks;

Figur 2     eine Schnittdarstellung von Elementen eines Planetengetriebes, das zum Einsatz in einem Getriebefan-Triebwerk geeignet ist, wobei eine Sonnenwelle, ein Sonnenrad, ein Planetenrad, ein Planeten-Gleitlagerstift und ein Trägerstift eines Drehmomentträgers dargestellt sind, und wobei das Planetenrad an seiner axial vorderen Stirnseite und an seiner axial hinteren Stirnseite eine Aussparung ausbildet, die sich ausgehend von der Stirnseite innerhalb des Planetenrads erstreckt;

Figur 3     eine vergrößerte Darstellung des Planetenrads und des Planeten-Gleitlagerstifts der Figur 2;

Figur 4     eine Darstellung von Elementen eines alternativen Planetengetriebes, bei dem anders als bei dem Planetengetriebe der Figuren 2 und 3 kein Trägerstift vorgesehen ist und stattdessen eine Drehmomentübertragung auf einen Drehmomentträger über eine fest mit den Planeten-Gleitlagerstiften verbundene Trägerplatte erfolgt;

Figur 5     Elemente des Planetengetriebes der Figur 4 in einer teilweise geschnittenen Ansicht;

Figur 6     eine Schnitterstellung des Planetenrads entsprechend den Figuren 2 und 3;

Figur 7     eine perspektivische Darstellung der Außenverzahnung eines Planetenrads gemäß einem Ausführungsbeispiel;

Figur 8     eine Schnitterstellung eines weiteren Ausführungsbeispiels eines Planetenrads, das an seinen Stirnseiten jeweils eine Aussparung ausbildet, die sich ausgehend von der Stirnseite innerhalb des Planetenrads erstreckt, wobei die Aussparung sich zu ihrem Ende hin verjüngt;

Figur 9     eine Schnitterstellung eines weiteren Ausführungsbeispiels eines Planetenrads, das an seinen Stirnseiten jeweils eine Aussparung ausbildet, die sich ausgehend von der Stirnseite innerhalb des Planetenrads erstreckt, wobei die Aussparung im Längsschnitt im wesentlichen rechteckförmig ausgebildet ist;

Figur 10     eine Schnitterstellung eines weiteren Ausführungsbeispiels eines Planetenrads, das an seinen Stirnseiten jeweils eine Aussparung ausbildet, die sich ausgehend von der Stirnseite innerhalb des Planetenrads erstreckt, wobei die Aussparung bei geringer Tiefe sich bis zur inneren Mantelfläche des Planetenrads erstreckt;

Figur 11     eine Schnitterstellung eines weiteren Ausführungsbeispiels eines Planetenrads, das an seinen Stirnseiten jeweils eine Aussparung ausbildet, die sich ausgehend von der Stirnseite innerhalb des Planetenrads erstreckt, wobei die Aussparung sich zu ihrem Ende hin verjüngt und eine große axiale Tiefe aufweist;

Figur 12     eine Schnitterstellung eines weiteren Ausführungsbeispiels eines Planetenrads, das an seinen Stirnseiten jeweils eine Aussparung ausbildet, die sich ausgehend von der Stirnseite innerhalb des Planetenrads erstreckt, wobei die Aussparung eine geringe radiale Dicke und axiale Tiefe aufweist;

Figur 13     eine Schnitterstellung eines weiteren Ausführungsbeispiels eines Planetenrads, das an seinen Stirnseiten jeweils eine Aussparung ausbildet, die sich ausgehend von der Stirnseite innerhalb des Planetenrads erstreckt, wobei die Aussparung eine geringe radiale Dicke und axiale Tiefe aufweist und sich dabei bis zur inneren Mantelfläche des Planetenrads erstreckt;

Figur 14     eine Schnitterstellung eines weiteren Ausführungsbeispiels eines Planetenrads, das an seinen Stirnseiten jeweils eine Aussparung ausbildet, die sich ausgehend von der Stirnseite innerhalb des Planetenrads erstreckt, wobei die innere Mantelfläche eine größere axiale Länge als die äußere Mantelfläche aufweist;

Figur 15     eine Schnitterstellung eines weiteren Ausführungsbeispiels eines Planetenrads, das an seinen Stirnseiten jeweils eine Aussparung ausbildet, die sich ausgehend von der Stirnseite innerhalb des Planetenrads erstreckt, wobei die beiden Aussparungen asymmetrisch bezogen auf die axiale Mitte des Planetenrads ausgebildet sind;

Figur 16     eine Schnittdarstellung eines Planeten-Gleitlagerstifts, der in einem Planetenrad anordbar ist und zu diesem ein Gleitlager bildet;

Figur 17     eine teilweise geschnittene Darstellung eines Planeten-Gleitlagerstifts, der in einem Planetengetriebe gemäß den Figuren 4 und 5 angeordnet ist;

Figur 18     den Planeten-Gleitlagerstift der Figur 17 in vergrößerter geschnittener Darstellung;

Figur 19     eine Schnitterstellung eines weiteren Ausführungsbeispiels eines mit einer Balligkeit versehenen Planeten-Gleitlagerstifts, wobei der Planeten-Gleitlagerstift eine kreisbogenförmige Anlagefläche bildet;

Figur 20 eine Schnitterstellung eines weiteren Ausführungsbeispiels eines mit einer Balligkeit versehenen Planeten-Gleitlagerstifts, wobei der Planeten-Gleitlagerstift eine asymmetrisch ausgebildete Anlagefläche bildet;

Figur 21 eine Schnitterstellung eines weiteren Ausführungsbeispiels eines mit einer Balligkeit versehenen Planeten-Gleitlagerstifts, wobei der Planeten-Gleitlagerstift symmetrisch ausgebildet ist und die Anlagefläche unterschiedlich geformte Bereiche aufweist;

Figur 22 eine Schnitterstellung eines weiteren Ausführungsbeispiels eines mit einer Balligkeit versehenen Planeten-Gleitlagerstifts, wobei der Planeten-Gleitlagerstift asymmetrisch ausgebildet ist und die Anlagefläche unterschiedlich geformte Bereiche aufweist;

Figur 23 eine weitere Darstellung des Planeten-Gleitlagerstifts der Figur 17 in vergrößerter geschnittener Darstellung;

Figur 24 die Schmierfilmdicke eines Gleitlagers in Abhängigkeit von der axialen Position des Gleitlagers für einen Planeten-Gleitlagerstift mit ballig ausgebildeter Anlagefläche; und

Figur 25 die Schmierfilmdicke eines Gleitlagers in Abhängigkeit von der axialen Position des Gleitlagers für einen zylindrisch geformten Planeten-Gleitlagerstift.

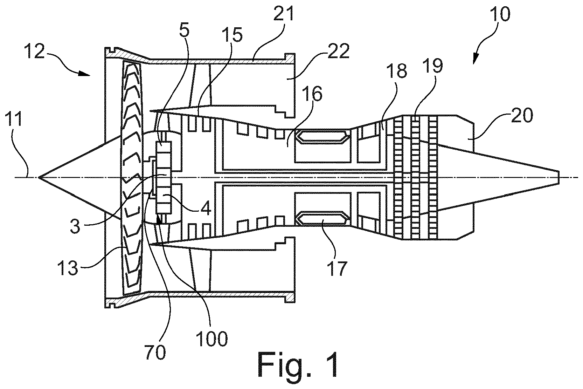

Die Figur 1 zeigt ein Getriebefan-Triebwerk 10 mit einer Drehachse 11, das für eine Verwendung in Flugzeugen vorgesehen ist. In der Richtung der axialen Durchströmung weist das Getriebefan-Triebwerk 10 hintereinander einen Lufteinlauf 12, eine Fanstufe 13 (grundsätzlich sind auch mehr als eine Fanstufe 13 möglich), ein Getriebe 100, einen Mitteldruckverdichter 15, einen Hochdruckverdichter 16, eine Verbrennungsvorrichtung 17, eine Hochdruckturbine 18, eine Mitteldruckturbine 19 und eine Düse 20 auf. Ein Fangehäuse 21 umgibt die Fanstufe 13 und definiert den Lufteinlauf 12.

Das Getriebefan-Triebwerk 10 arbeitet grundsätzlich in konventioneller Weise, wobei in den Lufteinlauf 12 eintretende Luft von der Fanstufe 13 beschleunigt wird. Dabei werden zwei Luftstrome erzeugt: Ein erster Strom tritt in den Mitteldruckverdichter 15 ein, ein zweiter Luftstrom fließt durch einen Nebenstromkanal 22, wobei der zweite Luftstrom den größten Anteil am Schub des Getriebefan-Triebwerks 10 liefert. Der Mitteldruckverdichter 15 verdichtet den eintretenden Luftstrom, bevor er in den Hochdruckverdichter 16 gelangt, in dem eine weitere Verdichtung erfolgt. Die verdichtete Luft, die aus dem Hochdruckverdichter 16 austritt, wird in die Verbrennungsvorrichtung 17 geführt, wo sie mit Brennstoff vermischt wird und die Mischung dann zur Verbrennung gebracht wird. Die heißen Verbrennungsgase werden in der Hochdruckturbine 18 und in der Mitteldruckturbine 19 entspannt, bevor sie durch die Düse 20 austreten und somit zusätzlichen Schub liefern.

Hinter dem Fanstufe 13 bildet das Getriebefan-Triebwerk 10 somit einen Nebenstromkanal 22 und einen Primärstromkanal aus. Der Primärstromkanal führt durch das Kerntriebwerk (Gasturbine), das den Mitteldruckverdichter 15, den Hochdruckverdichter 16, die Verbrennungsvorrichtung 17, die Hochdruckturbine 18 und die Mitteldruckturbine 19 umfasst. Der Nebenstromkanal 22 leitet im Betrieb des Getriebefan-Triebwerks 10 von der Fanstufe 13 angesaugte Luft am Kerntriebwerk vorbei.

Die Hochdruckturbine 18 und die Mitteldruckturbine 19 treiben über Wellenvorrichtungen jeweils den Hochdruckverdichter 16 und den Mitteldruckverdichter 15 an. Eine Mitteldruckwelle treibt die Fanstufe 13 über das Getriebe 100 an. Das Getriebe 100 ist dabei als Untersetzungsgetriebe ausgebildet, das die Drehzahl der Fanstufe 13 im Vergleich zum Mitteldruckverdichter 15 und zur Mitteldruckturbine 19 reduziert. Das Getriebe 100 ist in der dargestellten Ausführungsform ein Planetengetriebe mit einem statischen Hohlrad 5 und umlaufenden Planetenrädern 4, die im Hohlrad 5 umlaufen. Der Antrieb des Getriebes 100 erfolgt über ein Sonnenrad 3, das mit der Mitteldruckwelle gekoppelt ist. Der Abtrieb erfolgt in der dargestellten Ausführungsform über einen Drehmomentträger 70, der mit den Planetenrädern 4 gekoppelt ist.

Grundsätzlich sind auch andere Ausführungsformen des Getriebes 100 möglich, wobei z.B. das Hohlrad 5 beweglich ausgebildet sein kann, so dass der Abtrieb über das Hohlrad 5 erfolgt.

Die Ausgestaltung des Getriebefan-Triebwerks 10 gemäß der Figur 1 ist lediglich beispielhaft zu verstehen. Insbesondere die Anordnung der Wellen kann auch anders gewählt werden, wobei grundsätzlich Zwei- oder Dreiwellenanordnungen möglich sind. Beispielsweise kann alternativ eine Dreiwellenanordnung vorgesehen sein, die eine Niederdruckwelle, die die Niederdruckturbine mit dem Fan verbindet, eine Mitteldruckwelle, die die Mitteldruckturbine mit dem Mitteldruckverdichter verbindet, und eine Hochdruckwelle, die die Hochdruckturbine mit dem Hochdruckverdichter verbindet, umfasst. Dabei ist die Fanstufe 13 über ein Getriebe mit der Niederdruckwelle verbunden ist. Weiter können, wenn das Turbofantriebwerk keinen Mitteldruckverdichter und keine Mitteldruckturbine aufweist, nur eine Niederdruckwelle und eine Hochdruckwelle vorhanden sein, wobei wiederum die Fanstufe 13 über ein Getriebe mit der Niederdruckwelle verbunden ist.

Die beschriebenen Komponenten besitzen mit der Drehachse 11 eine gemeinsame Rotations- bzw. Maschinenachse. Die Drehachse 11 definiert eine axiale Richtung des Triebwerks 10. Eine radiale Richtung des Triebwerks 10 verläuft senkrecht zur axialen Richtung.

Im Kontext der vorliegenden Erfindung ist die Ausbildung des Planetengetriebes 100 von Bedeutung.

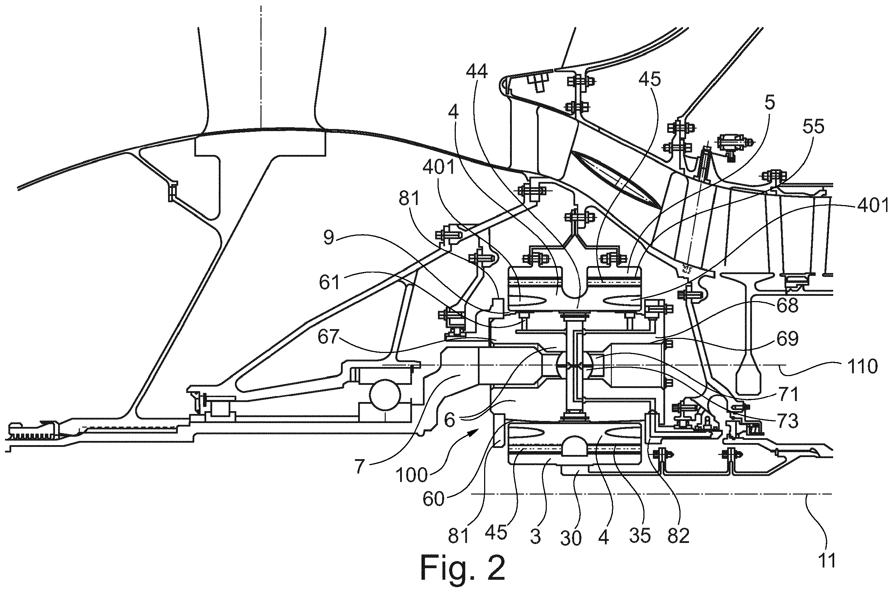

Die Figur 2 zeigt ein Ausführungsbeispiel eines Planetengetriebes 100 in einer Schnittdarstellung. Das Planetengetriebe 100 umfasst ein Sonnenrad 3, das von einer Sonnenwelle 30 angetrieben wird. Bei der Sonnenwelle 30 handelt es sich beispielsweise um die Mitteldruckwelle der Figur 1. Das Sonnenrad 3 und die Sonnenwelle 30 drehen sich dabei um eine Drehachse 11, die eine axiale Richtung des Planetengetriebes 100 definiert.

Das Planetengetriebe 100 umfasst des Weiteren eine Mehrzahl von Planetenrädern 4, von denen in der Schnittdarstellung der Figur 2 eines dargestellt ist. Das Sonnenrad 3 treibt die Mehrzahl der Planetenräder 4 an, wobei eine Verzahnung 35 des Sonnenrad 3 mit einer Verzahnung 45 des Planetenrads 4 in Eingriff steht. Bei der Verzahnung 35, 45 handelt es sich beispielsweise um eine Doppelschrägverzahnung.

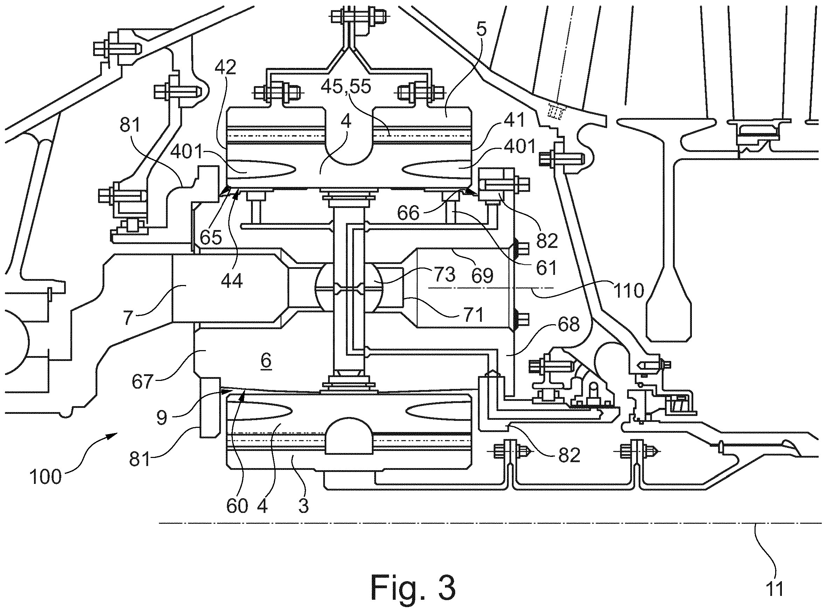

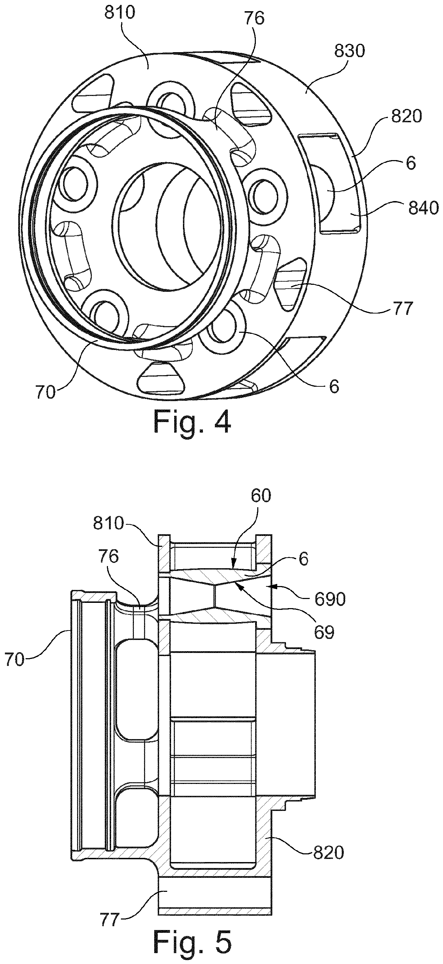

Die folgende Beschreibung eines Planetenrads 4 gilt für sämtliche Planetenräder, die von dem Sonnenrad 3 angetrieben werden. Das Planetenrad 4 ist hohlzylindrisch ausgebildet und bildet eine äußere Mantelfläche und eine innere Mantelfläche 44, wie in Bezug auf die Figuren 3 und 4 noch näher erläutert wird. Das Planetenrad 4 rotiert - angetrieben durch das Sonnenrad 3 - um eine Drehachse 110, die parallel zur Drehachse 11 verläuft. Die äußere Mantelfläche des Planetenrads 4 bildet eine Verzahnung 45 aus, die mit der Verzahnung 55 eines Hohlrads 5 in Eingriff steht. Die Verzahnungen 45, 55 können ebenfalls als Doppelschrägverzahnung ausgebildet sein. Das Hohlrad 5 ist feststehend, d. h. nichtrotierend angeordnet. Die Planetenräder 4 rotieren aufgrund ihrer Kopplung mit dem Sonnenrad 3 und wandern dabei entlang des Umfangs des Hohlrads 5. Die Rotation der Planetenräder 4 entlang des Umfangs des Hohlrads 5 ist langsamer als die Rotation der Sonnenwelle 3, wodurch eine Untersetzung bereitgestellt wird.

Das Planetenrad 4 weißt angrenzend an seine innere Mantelfläche 44 eine zentrierte axiale Öffnung auf. In die Öffnung eingebracht ist ein Planeten-Gleitlagerstift 6, wobei der Planeten-Gleitlagerstift 6 und das Planetenrad 4 an ihren einander zugewandten Flächen ein geschmiertes Gleitlager bilden. Zur Schmierung des Gleitlagers können sich radial erstreckende Schmierfilmöffnungen 61 im Planeten-Gleitlagerstift 6 ausgebildet sein, durch die von innen eingesprühtes oder in anderer Weise zugeführtes Schmieröl in einen Gleitlagerspalt 9 zwischen dem Planeten-Gleitlagerstift 6 und dem Planetenrad 4 zugeführt werden kann. Dabei wird darauf hingewiesen, dass im Planeten-Gleitlagerstift 6 auch davon abweichende oder zusätzliche Mittel zum Zuführen von Schmieröl zum Gleitlager ausgebildet sein können.

Im Betrieb weisen das Planetenrad 4 und der Planeten-Gleitlagerstift 6 nicht exakt die gleiche Achse auf, da das in hydrodynamischer Bauweise ausgeführte Gleitlager eine Exzentrizität im Bereich von Zehntelmillimetern mit sich bringt.

Der Planeten-Gleitlagerstift 6 weist eine außenseitige Anlagefläche 60 auf, die ballig ausgebildet ist. Dementsprechend nimmt der Außendurchmesser des Planeten-Gleitlagerstifts zu den axialen Enden der Anlagefläche 60 hin ab und weist dort ein Minimum auf.

Der Planeten-Gleitlagerstift 6 weist angrenzend an seine Innenfläche 69 ebenfalls eine axiale Öffnung bzw. Bohrung auf und ist dazu vorgesehen, in dieser einen Trägerstift 7 eines Drehmomentträgers aufzunehmen. Der Trägerstift 7 ist dabei in einem verjüngten Bereich 71 des Trägerstifts 7 in einem Gelenklager 73 innerhalb der Bohrung des Planeten-Gleitlagerstifts 6 gelagert. Das Gelenklager 73 erlaubt eine gewisse Schiefstellung des Trägerstiftes 7 gegenüber der Drehachse 110. Ein Trägerstift 7 ist in jedem der Planeten-Gleitlagerstifte 6 des Planetengetriebes 100 angeordnet. Die Trägerstifte 7 sind an ihren aus der Öffnung des Planeten-Gleitlagerstifts 6 herausragenden Enden fest miteinander verbunden und bilden dabei einen Drehmomentträger entsprechend dem Drehmomentträger 70 der Figur 1. Der Drehmomentträger bildet ein Abtriebselement des Planetengetriebe ist mit der Fanwelle bzw. allgemein mit einer Abtriebswelle gekoppelt.

Die genaue Form des Trägerstiftes 7 und dessen dargestellte Lagerung an der Innenfläche des Planeten-Gleitlagerstifts 6 sind dabei nur beispielhaft zu verstehen. Auch wird darauf hingewiesen, dass eine Kopplung des Planeten-Gleitlagerstifts 6 mit einem Drehmomentträger auch in anderer Weise erfolgen kann, wie anhand der Figuren 4 und 5 beispielhaft aufgezeigt wird.

Die Figur 2 zeigt des Weiteren eine vordere Trägerplatte 81 und eine hintere Trägerplatte 82. Der Planeten-Gleitlagerstift 6 ist mit der vorderen Trägerplatte 81 und mit der hinteren Trägerplatte 82 befestigt, beispielsweise mit diesen verschraubt oder verschweißt. Dazu ist vorgesehen, dass der Planeten-Gleitlagerstift 6 ein axial vorderes Ende 67 und ein axial hinteres Ende 68 aufweist, die jeweils axial gegenüber den Enden der Anlagefläche 60 hervorstehen, wobei der Planeten-Gleitlagerstift 6 an den Enden 67, 68 mit den Trägerplatten 81, 82 befestigt ist.

Das Planetenrad 4 ist derart ausgebildet, dass es an seinen Stirnseiten jeweils eine Aussparung 401 aufweist, die sich von der Stirnseite im Wesentlichen in Richtung der axialen Mitte des Planetenrads und dementsprechend innerhalb des Planetenrads 4 erstreckt. Der Aufbau des Planetenrads 4 und des Planeten-Gleitlagerstifts 6 wird nachfolgend weitergehend in Bezug auf die Figur 3 erläutert, die einen Ausschnitt aus der Figur 2 darstellt.

Gemäß der Figur 3 ist zu erkennen, dass das Planetenrad 4 an seinen beiden Stirnseiten 41, 42 jeweils eine Aussparung 401 ausbildet, die sich von der Stirnseite 41, 42 im Wesentlichen in axialer Richtung (bzw. ausgehend von der Stirnseite 41 entgegen der axialen Richtung) in das Innere des Planetenrads 4 erstreckt. Hierdurch werden die Masse des Planetenrads 4 und die Steifigkeit des Planetenrads 4 zu seinen Stirnseiten 41, 42 hin reduziert.

Das Gleitlager zwischen dem Planeten-Gleitlagerstift 6 und dem Planetenrad 4 wird durch die zylindrische innere Mantelfläche 44 des Planetenrads 4 und die mit einer Balligkeit versehene Anlagefläche 60 des Planeten-Gleitlagerstifts 6 gebildet. Der im Bereich des Gleitlagers ausgebildete Gleitlagerspalt 9 nimmt dabei aufgrund der Krümmung der Anlagefläche 60 zum axial vorderen Ende und zum axial hinteren Ende des Gleitlagers in seiner radialen Dicke zu. Bei hohen Drehmomenten und Zentrifugalkräften können sich die aneinander angrenzenden Flächen 44, 60 des Gleitlagers jedoch an dessen Enden im Wesentlichen parallel ausrichten. Hierzu tragen auch die in dem Planetenrad 4 ausgebildeten Aussparungen 401 bei, die diesem an seinen Enden eine erhöhte Flexibilität geben.

Die Figuren 4 und 5 zeigen Elemente eines weiteren Planetengetriebes. Das Planetengetriebe der Figuren 4 und 5 ist grundsätzlich wie das Planetengetriebe der Figuren 2 und 3 aufgebaut. Es unterscheidet sich lediglich in der Art, in der das Drehmoment abgenommen und auf einen Drehmomentträger (entsprechend dem Drehmomentträger 70 der Figur 1) übertragen wird. Die Figur 4 zeigt nur solche Elemente des Planetengetriebes, die diese unterschiedliche Art der Drehmomentübertragung betreffen. Die übrigen, nicht dargestellten Elemente entsprechen der Ausgestaltung der Figuren 2 und 3. Insbesondere umfasst das Getriebe wie in Bezug auf die Figuren 2 und 3 erläutert ein Sonnenrad, eine Sonnenwelle, eine Mehrzahl von Planetenrädern, die von dem Sonnenrad angetrieben werden, und ein Hohlrad.

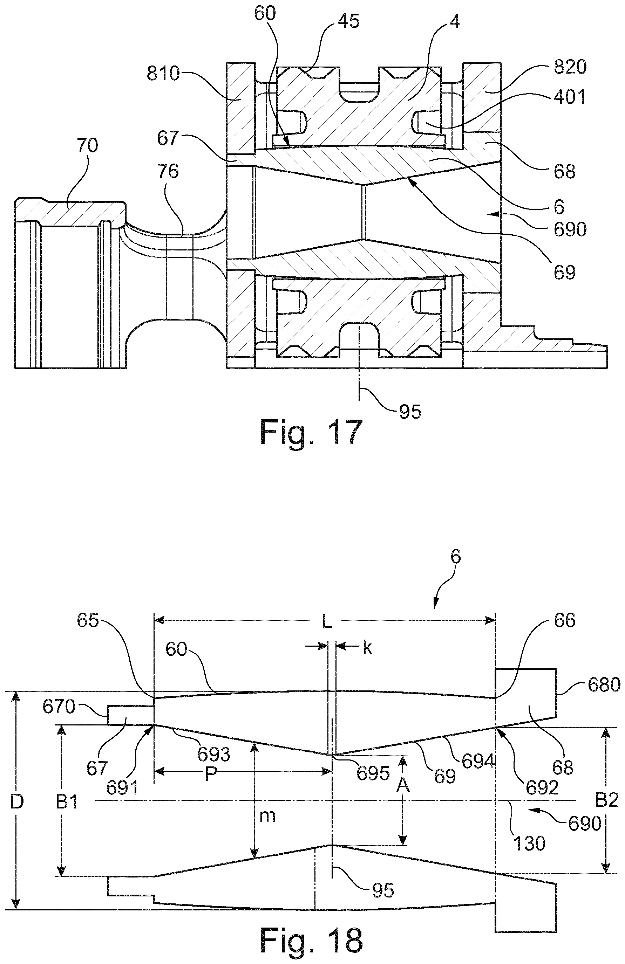

In den Figuren 4 und 5 ist zu erkennen, dass die Planeten-Gleitlagerstifte 6 fest mit einer vorderen Trägerplatte 810 und einer hinteren Trägerplatte 820 verbunden sind. Sie sind mit den Trägerplatten 810, 820 beispielsweise fest verschraubt oder verschweißt. Der Planeten-Gleitlagerstift 6 weist ebenso wie im Ausführungsbeispiel der Figuren 2 und 3 jeweils eine ballige außenseitige Anlagefläche 60 auf. An seiner Innenfläche 69 bildet der Planeten-Gleitlagerstift 6 eine Bohrung 690 aus, deren Innendurchmesser zur axialen Mitte des Planeten-Gleitlagerstifts hin abnimmt. Im dargestellten Ausführungsbeispiel ist die Bohrung 690 doppelt konisch ausgebildet. Hierauf wird in Bezug auf die Figuren 17 und 18 näher eingegangen werden.

Anders als beim Ausführungsbeispiel der Figuren 2 und 3 nimmt die axiale Bohrung 690 des Planeten-Gleitlagerstifts 6 keinen Trägerstift eines Drehmomentträgers auf, sondern ist leer. Ein Trägerstift ist nicht vorhanden. Die Übertragung eines Drehmoments auf einen Drehmomentträger 70 erfolgt über Verbindungsstege 76, die den Drehmomentträger 70 fest mit der vorderen Trägerplatte 810 verbinden. Der Drehmomentträger 70 ist im dargestellten Ausführungsbeispiel als Ring ausgebildet. Dies ist jedoch nur beispielhaft zu verstehen. Der Drehmomentträger 70 ist in nicht dargestellter Weise mit der Fanwelle gekoppelt.

Beim Ausführungsbeispiel der Figuren 4 und 5 sind der Drehmomentträger 70, die vordere Trägerplatte 810 und die hintere Trägerplatte 820 einteilig ausgebildet, während sie beim Ausführungsbeispiel der Figuren 2 und 3 dreiteilig ausgebildet sind. Durch die Zusammenführung des Drehmomentträgers und der Trägerplatten zu einem Teil kann der Trägerstift 7 der Figuren 2 und 3 wegfallen. Die Abnahme des Drehmoments erfolgt nicht mehr mittig in der Bohrung des Planeten-Gleitlagerstifts 6, sondern von der vorderen Trägerplatte 810. Dementsprechend wird beim Ausführungsbeispiel der Figuren 4 und 5 auch kein Gelenklager (entsprechend dem Gelenklager 73 der Figuren 2 und 3) benötigt.

Zum einteiligen Aufbau von vorderer Trägerplatte 810, hinterer Trägerplatte 820 und Drehmomentträger 70 wird weiter angemerkt, dass die vordere Trägerplatte 810 und die hintere Trägerplatte 820 durch am Umfang ausgebildete Wandflächen 830 miteinander verbunden sind, zwischen denen sich jeweils im wesentlichen rechteckförmige Aussparungen 840 befinden, die der Aufnahme jeweils eines Planetenrads dienen. Weiter weist die durch die beiden Trägerplatten 810, 820 und den Drehmomentträger 70 gebildete strukturelle Einheit axiale Bohrungen 77 auf, die der Ankopplung weiterer Teile (nicht dargestellt) für eine Drehmomentübertragung dienen können.

Die dargestellte Anzahl von fünf Planeten-Gleitlagerstiften 6, fünf Verbindungsstegen 76 und fünf axialen Bohrungen 77 ist nur beispielhaft zu verstehen.

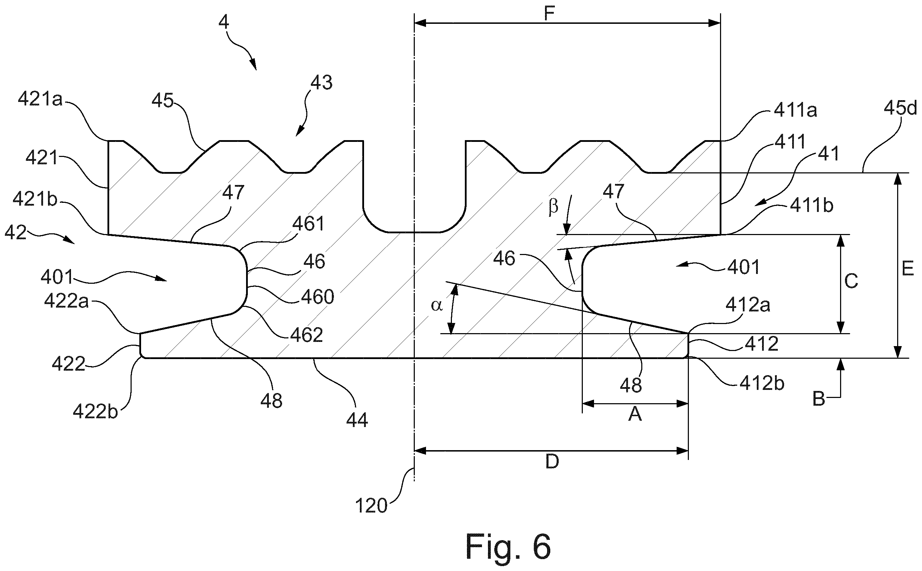

Die Figur 6 zeigt den Aufbau des Planetenrads 4 unter systematischer Darstellung der relevanten Parameter. Das Planetenrad 4 ist näherungsweise hohlzylindrisch ausgebildet und weist eine äußere Mantelfläche 43 und eine innere Mantelfläche 44 auf. Im Bereich der äußeren Mantelfläche 43 ist eine Verzahnung 45 ausgebildet, die beispielsweise eine Doppelschrägverzahnung ist. Die äußere Mantelfläche 43 weist eine axiale Länge von $2*F$ auf. Die innere Mantelfläche 44 weist eine axiale Länge von $2*D$ auf. Die äußere Mantelfläche 43 kann eine größere, die gleiche oder eine kleinere axiale Länge als die Mantelfläche 44 aufweisen, d. h. D kann kleiner F, gleich F oder größer F sein.

Die Dicke E des Planetenrads 4 ist definiert durch den radialen Abstand zwischen seiner inneren Mantelfläche 44 und der zylinderförmigen Zahnfußfläche 45d der Verzahnung 45 der äußeren Mantelfläche 43.

Das Planetenrad 4 weist eine axial vordere Stirnseite 42 und eine axial hintere Stirnseite 41 auf. Jede der Stirnseiten umfasst einen äußeren Stirnseitenbereich 421, 411 und einen inneren Stirnseitenbereich 422, 412 auf. Der äußere Stirnseitenbereich 421 der axial vorderen Stirnseite 42 erstreckt sich an der Stirnseite 42 von der Aussparung 401 bis zur äußeren Mantelfläche 43, wobei der äußere Stirnseitenbereich 421 eine radial innere Stirnseitenkante 421b zur Aussparung 401 und eine radial äußere Stirnseitenkante 421a zur äußeren Mantelfläche 43 bildet. In entsprechender Weise erstreckt sich äußere Stirnseitenbereich 411 an der axial hinteren Stirnseite 41 von der Aussparung 401 bis zur äußeren Mantelfläche 43, wobei der äußere Stirnseitenbereich 411 eine radial innere Stirnseitenkante 411b zur Aussparung 401 und eine radial äußere Stirnseitenkante 411a zur äußeren Mantelfläche 43 bildet.

Der innere Stirnseitenbereich 422 der axial vorderen Stirnseite 42 erstreckt sich an der Stirnseite 42 von der Aussparung 401 bis zur inneren Mantelfläche 44, wobei der innere Stirnseitenbereich 422 eine radial äußere Stirnseitenkante 422a zur Aussparung 401 und eine radial innere Stirnseitenkante 422b zur inneren Mantelfläche 44 bildet. In entsprechender Weise erstreckt sich der innere Stirnseitenbereich 412 an der axial hinteren Stirnseite 41 von der Aussparung 401 bis zur inneren Mantelfläche 44, wobei der innere Stirnseitenbereich 412 eine radial äußere Stirnseitenkante 412a zur Aussparung 401 und eine radial innere Stirnseitenkante 412b zur inneren Mantelfläche bildet.

Die radiale Dicke C der Aussparung 401 an der Stirnseite 41 des Planetenrads 4 ist definiert als der radiale Abstand zwischen der radial inneren Stirnseitenkante 411b des äußeren Stirnseitenbereichs 411 und der radial äußeren Stirnseitenkante 412a des inneren Stirnseitenbereich 412. In entsprechender Weise ist die radiale Dicke C an der anderen Stirnseite 42 des Planetenrads 4 definiert.

Die radiale Dicke B des inneren Stirnseitenbereich 412 ist definiert durch den radialen Abstand zwischen den Kanten 412a und 412b. Dabei gilt, dass B plus C kleiner E ist.

Die Aussparung 401 umfasst jeweils eine radial äußere Begrenzung 47 und eine radial innere Begrenzung 48, die sich jeweils ausgehend von der Stirnseite 41, 42 zum im Planetenrad 4 ausgebildeten Ende 46 der Aussparung 401 erstrecken. Die äußere Begrenzung 47 und die innere Begrenzung 48 können dabei grundsätzlich eine beliebige Form aufweisen. Im dargestellten Ausführungsbeispiel verlaufen sie im Wesentlichen eben, weswegen sie in der Schnittdarstellung der Figur 6 im Wesentlichen gradlinig dargestellt sind. Dies ist jedoch nicht notwendigerweise der Fall. Alternativ können die äußere Begrenzung 47 und die innere Begrenzung 48 beispielsweise kreisförmig oder parabelförmig gebogen sein.

Das im Planetenrad ausgebildete Ende 46 der Aussparung 401 weist im Ausführungsbeispiel der Figur 6 eine sich im Wesentlichen radial erstreckende Fläche 460 auf, die durch abgerundete Ecken 461, 462 in die radial äußere Begrenzung 47 und die radial innere Begrenzung 48 der Aussparung 401 übergeht. Alternativ ist eine solche sich im Wesentlichen radial erstreckende Fläche 460 nicht vorgesehen und das Ende 46 der Aussparung beispielsweise im Längsschnitt halbkreisförmig oder parabelförmig ausgebildet.

Gemäß der Figur 6 nimmt die radiale Dicke C der Aussparung mit zunehmendem Abstand zur Stirnseite, d. h. in Richtung des Endes 46 der Aussparung ab. Zur genaueren Definition des Verlaufs der Aussparung sind in der Figur 6 die Winkel $\alpha$ und $\beta$ definiert. Der Winkel $\alpha$ ist der Winkel, den die radial innere Begrenzung 48 der Aussparung 401 angrenzend an den inneren Stirnseitenbereich 412 zur axialen Richtung bildet. Der Winkel $\beta$ ist der Winkel, den die radial äußere Begrenzung 47 der Aussparung 401 angrenzend an den äußeren Stirnseitenbereich 411 zur axialen Richtung bildet. Beide Winkel liegen beispielsweise im Bereich zwischen 0° und 45°.

Die axiale Länge A der Aussparung 401 ist definiert als axialer Abstand zwischen dem inneren Stirnseitenbereich 412 der Stirnseite 41 und der axialen Position des Endes 46 der Aussparung 401. Für die Aussparung 401 an der anderen Stirnseite 42 gelten die genannten Definitionen in entsprechender Weise.

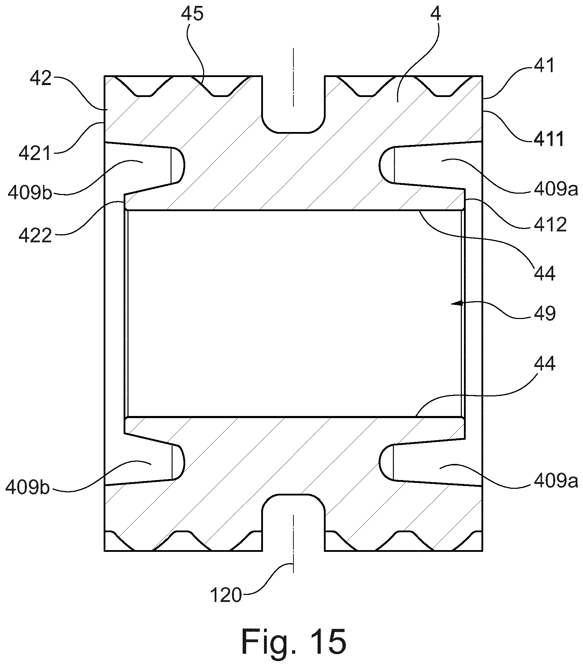

Die Figur 6 zeigt auch die axiale Mitte 120 des Planetenrads 4. Das Planetenrad 4 ist spiegelsymmetrisch in Bezug auf seine axiale Mitte 120. Dies ist jedoch nicht notwendigerweise der Fall, wie anhand der Figur 15 erläutert wird.

Das Planetenrad 4 realisiert bestimmte Verhältnisse der wie oben definierten Parameter A, B, C und E.

So gilt für das Verhältnis der radialen Dicke C der Aussparung 401 zur Dicke E des Planetenrads: $0,1 \leq C/E \leq 0,9$.

Für das Verhältnis der radialen Dicke B des inneren Stirnseitenbereichs 412 zur Dicke E des Planetenrads gilt: $0,01 \leq B/E \leq 0,6$.

Für das Verhältnis der axialen Länge A der Aussparung 401 zur halben axialen Länge D der inneren Mantelfläche 44 gilt: $0,01 \leq A/D \leq 0,9$.

Das in der Figur 6 dargestellte Planetenrad 4 ist rotationssymmetrisch ausgebildet.

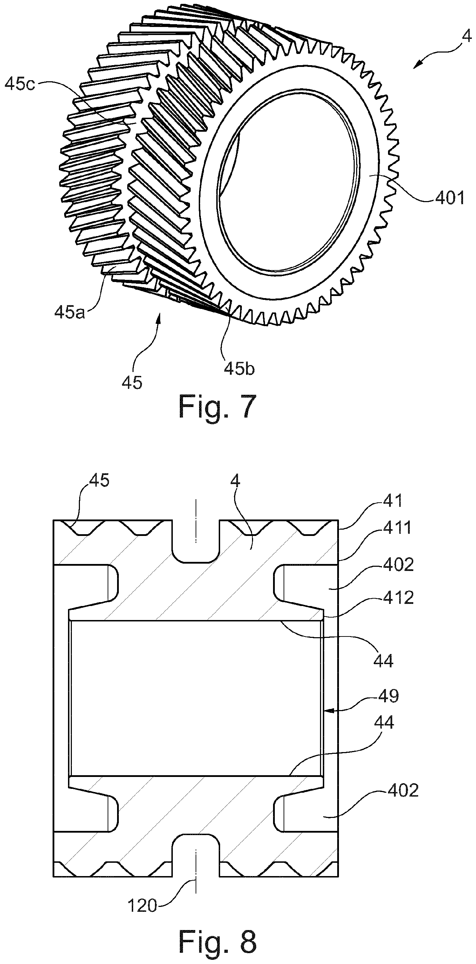

Die Figur 7 zeigt beispielhaft ein Planetenrad 4 mit einer Doppelschrägverzahnung 45, die eine erste Verzahnung 45a und eine zweite Verzahnung 45b aufweist. Die beiden Verzahnungen 45a, 45b sind durch einen axialen Spalt 45c voneinander getrennt. Die im Planetenrad 4 ausgebildete Aussparung 401 ist ebenfalls dargestellt.

Die Figuren 8-15 zeigen verschiedene Ausgestaltungen einer Aussparung, die im Planetenrad 4 ausgebildet ist. Dabei ist eine Aussparung jeweils an beiden Stirnseiten des Planetenrads 4 in identischer Weise und symmetrisch bezogen auf die axiale Mitte des Planetenrads 4 ausgebildet. Die Beschreibung erfolgt exemplarisch jeweils nur für die an der einen Stirnseite ausgebildete Aussparung. Sie gilt in entsprechender Weise für die an der anderen Stirnseite ausgebildete Aussparung.

Die Figuren 8-15 zeigen jeweils eine Schnittdarstellung des Planetenrads 4, wobei erkennbar ist, dass das Planetenrad 4 angrenzend an die innere Mantelfläche 44 eine axiale Öffnung 49 ausbildet, die entsprechend der Beschreibung der Figuren 2 und 3 beispielsweise der Aufnahme eines Planeten-Gleitlagerstifts dient. Die Stirnseite 41 weist jeweils wie in Bezug auf die Figur 4 beschrieben einen äußeren Stirnseitenbereich 411 und einen inneren Stirnseitenbereich 412 auf, zwischen denen die Aussparung ausgebildet ist.

Die in Bezug auf die Figur 6 erläuterten Parameter a, β, A, B, C und E sind dabei in den Figuren 6-12 unterschiedlich gewählt, wie im Folgenden ausgeführt wird.

Gemäß der Figur 8 sind die Parameter wie folgt gewählt:

$$\alpha = 12°$$

$$\beta = 0°$$

$$A = 0,4 * D$$

$$B = 0,15 * E$$

$$C = 0,5 * E$$

Die Aussparung 402 verjüngt sich in Richtung der axialen Mitte 120 des Planetenrads 4, wobei nur die radial innere Begrenzung der Aussparung 402 entsprechend dem Winkel α schräg zur axialen Richtung verläuft.

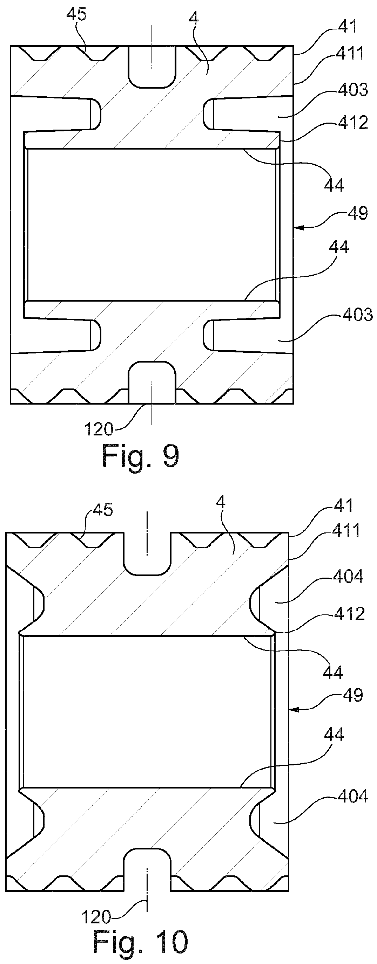

Gemäß der Figur 9 sind die Parameter wie folgt gewählt:

$$\alpha = 2°$$

$$\beta = 2°$$

$$A = 0,6 * D$$

$$B = 0,2 * E$$

$$C = 0,4 * E$$

Die Aussparung 403 verläuft aufgrund der geringen Werte für die Winkel α und β näherungsweise zylindrisch bzw. im Längsschnitt rechteckförmig. Sie erstreckt sich dabei aufgrund des hohen Wertes des Quotienten A/D relativ weit in Richtung der axialen Mitte 120 des Planetenrads 4.

Gemäß der Figur 10 sind die Parameter wie folgt gewählt:

$$\alpha = 35°$$

$$\beta = 35°$$

$$A = 0,2 * D$$

$$B = 0,01* E$$

$$C = 0,8 * E$$

Aufgrund des geringen Wertes des Quotienten A/D erstreckt sich die Aussparung 404 nur über eine relativ geringe axiale Länge in Richtung der axialen Mitte 120 des Planetenrads. Gleichzeitig verlaufen die radial äußere Begrenzung und die radial innere Begrenzung der Aussparung 404 aufgrund der hohen Werte der Winkel α und β sehr schräg zur axialen Richtung.

Weiter fällt bei der Figur 10 auf, dass aufgrund des sehr niedrigen Wertes des Quotienten B/E von 0,01 der innere Stirnseitenbereich 412 lediglich durch eine Kante gebildet ist. Mit anderen Worten fallen die Kanten 412a, 412b der Figur 4 zusammen.

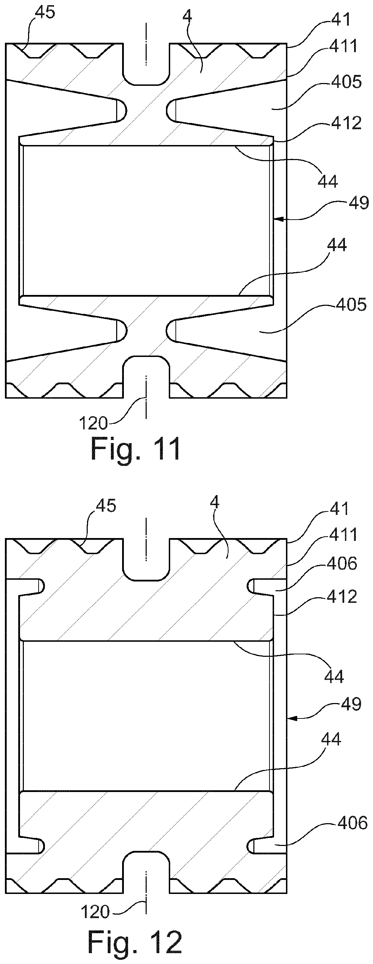

Gemäß der Figur 11 sind die Parameter wie folgt gewählt:

$$\alpha = 8°$$

$$\beta = 10°$$

$$A = 0,85 * D$$

$$B = 0,1 * E$$

$$C = 0,65 * E$$

Aufgrund des sehr hohen Wertes des Quotienten A/D von 0,85 erstreckt sich die Aussparung 405 fast bis zur axialen Mitte 120 des Planetenrads 4. Dabei verlaufen die radial äußere Begrenzung und die radial innere Begrenzung der Aussparung 404 leicht schräg zur axialen Richtung.

Gemäß der Figur 12 sind die Parameter wie folgt gewählt:

$$\alpha = 8°$$

$$\beta = 0°$$

$$A = 0{,}2 * D$$

$$B = 0{,}5 * E$$

$$C = 0{,}2 * E$$

Aufgrund des geringen Wertes des Quotienten A/D von 0,2 erstreckt sich die Aussparung 406 nur über eine relativ geringe axiale Länge in Richtung der axialen Mitte 120 des Planetenrads. Wegen des hohen Wertes des Quotienten B/E findet sich die Aussparung 406 dabei in relativ großem radialen Abstand zur inneren Mantelfläche 44. Auch ist die radiale Höhe der Aussparung 406 nur gering.

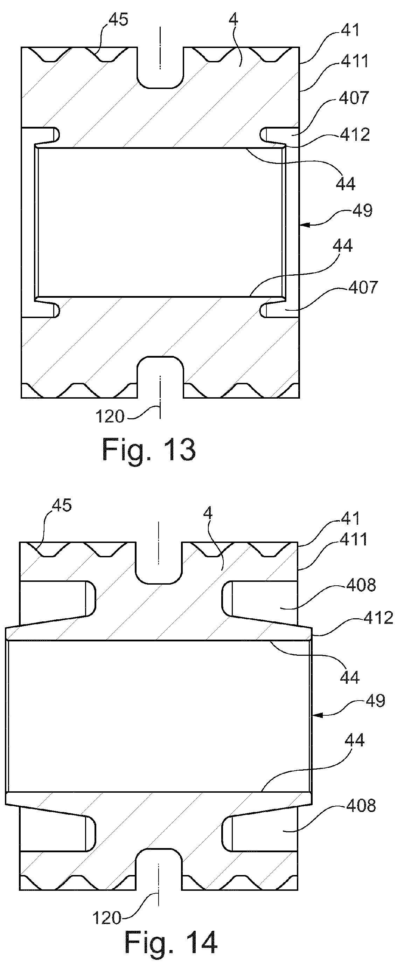

Gemäß der Figur 13 sind die Parameter wie folgt gewählt:

$$\alpha = 8°$$

$$\beta = 5°$$

$$A = 0{,}2 * D$$

$$B = 0{,}05 * E$$

$$C = 0{,}2 * E$$

Wie auch bei der Figur 10 gilt, dass sich die Aussparung 107 aufgrund des geringen Wertes des Quotienten A/D von 0,2 nur über eine relativ geringe axiale Länge in Richtung der axialen Mitte 120 des Planetenrads erstreckt. Wegen des niedrigen Wertes des Quotienten B/E findet sich die Aussparung 407 dabei anders als bei der Figur 10 in geringen radialen Abstand zur inneren Mantelfläche 44, wobei ähnlich wie bei der Figur 8 der innere Stirnseitenbereich 412 im Wesentlichen durch eine Kante gebildet ist, während der äußere Stirnseitenbereich 412 eine vergleichsweise große radiale Erstreckung aufweist.

Gemäß der Figur 14 sind die Parameter wie folgt gewählt:

$$\alpha = 8°$$

$$\beta = 0°$$

$$A = 0{,}7 * D$$

$$B = 0{,}15 * E$$

$$C = 0{,}5 * E$$

Bei der Figur 14 ist die axiale Länge der inneren Mantelfläche 44 größer als die axiale Länge der äußeren Mantelfläche. Der Verlauf der Aussparung 408 entspricht näherungsweise den Verlauf der Aussparung 402 der Figur 6.

Gemäß der Figur 15 sind die Parameter wie folgt gewählt:

$\alpha = 13°$ bei der linken Aussparung 409b; $\alpha = 4°$ bei der rechten Aussparung 409a

$\beta = 5°$ bei der linken Aussparung 409b; $\beta = 4°$ bei der rechten Aussparung 409a

A = 0,4*D bei der linken Aussparung 409b; A = 0,6*D bei der rechten Aussparung 409a

B = 0,15*E bei der linken Aussparung 409b; B = 0,2*E bei der rechten Aussparung 409a

C = 0,45*E bei der linken Aussparung 409b; C = 0,4*E bei der rechten Aussparung 409a

Bei der Figur 15 sind die beiden Aussparungen 409a, 409b somit asymmetrisch im Hinblick auf die axiale Mitte 120 des Planetenrads ausgebildet. Da der Quotient A/D bei der linken Aussparung 409b kleiner ist als bei der rechten Aussparung 409a, erstreckt sich die linke Aussparung 409b über eine geringere axiale Länge in Richtung der axialen Mitte 120 des Planetenrads als die rechte Aussparung 409a. In anderen Ausgestaltungen liegt eine Asymmetrie lediglich im Hinblick auf einige der genannten Parameter vor.

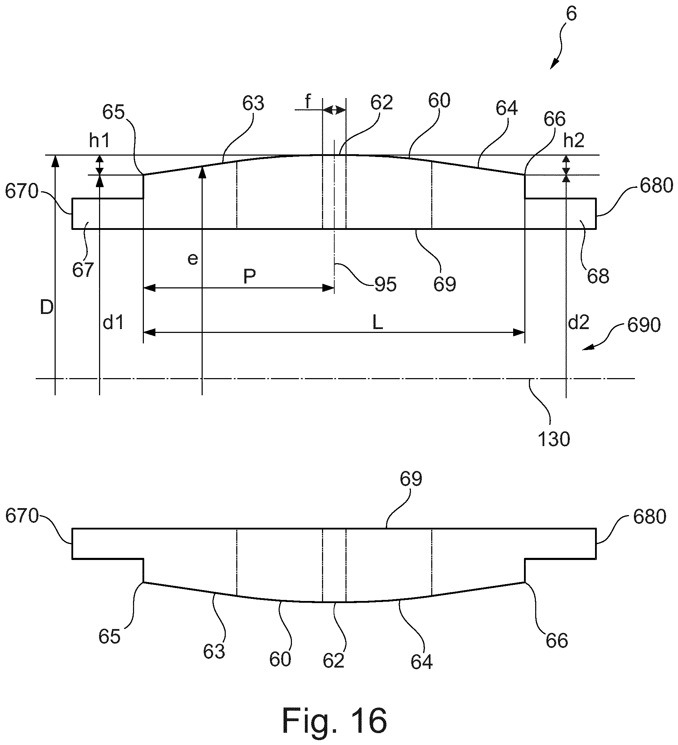

Die Figur 16 erläutert beispielhaft die Ausgestaltung und die relevanten Parameter eines Planeten-Gleitlagerstifts, der entsprechend einem Planeten-Gleitlagerstift 6 gemäß den Figuren 2 bis 5 ausgebildet ist. In der Schnittdarstellung der Figur 16 ist dabei eine Längsachse 130 des Planeten-Gleitlagerstifts 6 erkennbar. Diese ist im Wesentlichen identisch mit der Drehachse 110 des Planetenrads 110, vgl. Figur 2, wobei jedoch die hydrodynamische Bauweise des Gleitlagers eine kleine Exzentrizität z.B. im Bereich von Zehntelmillimetern mit sich bringt. Der Planeten-Gleitlagerstift 6 bildet angrenzend an eine innere Mantelfläche bzw. Innenfläche 69 des Planeten-Gleitlagerstifts 6 eine axiale Öffnung 690 aus, die dazu dient, einen Trägerstift eines Drehmomentträgers aufzunehmen, beispielsweise den Trägerstift 7 der Figur 2.

Der Planeten-Gleitlagerstift 6 bildet eine außenseitige Anlagefläche 60 aus, die ein axial vorderes Ende 65 und ein axial hinteres Ende 66 aufweist. Der axiale Abstand zwischen diesen beiden Enden wird mit L bezeichnet. Zwischen diesen beiden Enden 65, 66 bildet die Anlagefläche 60 eine Balligkeit in dem Sinne aus, dass ihr Außendurchmesser zu den axialen Enden 65, 66 hin abnimmt und an den axialen Enden 65, 66 ein Minimum erreicht.

Der Planeten-Gleitlagerstift 6 weist dabei einen minimalen Außendurchmesser d1 an seinem axialen Ende 65, einen minimalen Außendurchmesser d2 an seinem axialen Ende 66 und einen maximalen Außendurchmesser D zwischen seinen axialen Enden 65, 66 auf. Dabei definiert die halbe Differenz h1 zwischen dem maximalen Außendurchmesser D und dem minimalen Außendurchmesser d1 die Balligkeit der Anlagefläche zwischen der axialen Position des maximalen Außendurchmessers und dem einen Ende 65. Weiter definiert die halbe Differenz h2 zwischen dem maximalen Außendurchmesser D und dem minimalen Außendurchmesser d2 die Balligkeit der Anlagefläche zwischen der axialen Position des maximalen Außendurchmessers und dem anderen Ende 66.

Es kann vorgesehen sein, dass d1 gleich d2 oder alternativ das d1 ungleich d2 ist. Dementsprechend ist h1 gleich h2 oder es ist h1 ungleich h2.

Die Differenz zwischen dem maximalen Außendurchmesser D und dem Außendurchmesser e an einer betrachteten axialen Position des Planeten-Gleitlagerstifts nimmt zu den axialen Enden 65, 66 des Planeten-Gleitlagerstifts 6 stetig zu.

Der maximale Außendurchmesser D ist im Ausführungsbeispiel der Figur 16 an der axialen Mitte 95 des Planeten-Gleitlagerstifts 6 und in einem zylindrischen Bereich 62 der axialen Länge f um diese axiale Mitte 95 herum realisiert. Das Maximum des Außendurchmessers D ist somit in einem zylindrischen Bereich 62 konstanten Außendurchmessers realisiert, der sich symmetrisch zur axialen Mitte 95 über eine definierte axiale Länge f erstreckt. Dies ist allerdings nicht notwendigerweise der Fall. Alternativ wird das Maximum des Außendurchmessers D lediglich entlang einer Umfangslinie bzw. im in der Figur 13 dargestellten Längsschnitt an einem Scheitelpunkt erreicht.

Der axiale Abstand zwischen dem axial vorderen Ende 65 der Anlagefläche 60 zum Maximum des Außendurchmesser D oder, wenn das Maximum in einem zylindrischen Bereich ausgebildet ist, zur Mitte dieses zylindrischen Bereichs, wird in der Figur 4 als P bezeichnet. In der Figur 4 liegt P dabei aufgrund der symmetrischen Ausgestaltung der Anlagefläche 60 in der axialen Mitte 95 der Anlagefläche.

Die Anlagefläche 60 des Planeten-Gleitlagerstifts 6 bildet im Längsschnitt eine erste konvexe Kurve 63 aus, die sich zwischen dem zylindrischen Bereich 62 und dem vorderen axialen Ende 65 erstreckt, sowie eine zweite konvexe Kurve 64 aus, die sich zwischen dem zylindrischen Bereich 62 und dem hinteren axialen Ende 66 erstreckt. Die Form der Kurven 63, 64 kann grundsätzlich beliebig sein. Beispielsweise sind die Kurven kreisförmig, parabelförmig oder gradlinig ausgebildet.

Der Planeten-Gleitlagerstift 6 weist axiale Verlängerungen bzw. Enden 67, 68 auf, die jeweils eine vordere axialen Stirnseite 670 des Planeten-Gleitlagerstifts 6 und eine hintere axiale Stirnseite 680 des Planeten-Gleitlagerstifts bilden. Wie in Bezug auf die Figuren 2 und 3 erläutert, ist der Planeten-Gleitlagerstift 6 an diesen Enden 67, 68 jeweils an einer Trägerplatte befestigt.

Der Planeten-Gleitlagerstift 6 realisiert bestimmte Verhältnisse der wie oben definierten Parameter h, P, f, L und D.

So gilt für das Verhältnis der Länge P zur axialen Gesamtlänge L: $0 \leq P/L \leq 1$. Dies bedeutet, dass das Maximum des Außendurchmessers D grundsätzlich an beliebiger axialer Position des Planeten-Gleitlagerstifts 6 ausgebildet sein kann. Insbesondere sind auch asymmetrische Anordnungen möglich. Auch umfasst die Offenbarung

Ausführungsvarianten, bei denen das Maximum des Außendurchmessers D an dem einen axialen Ende der Anlagefläche (P=0) oder an dem anderen axialen Ende der Anlagefläche (P=L) ausgebildet ist. In anderen Ausführungsvarianten befindet sich das Maximum des Außendurchmessers D stets zwischen den beiden axialen Enden der Anlagefläche.

Es gilt für das Verhältnis der axialen Länge des zylindrischen Bereichs f zur axialen Gesamtlänge L: $0 \leq f/L \leq 0,75$. Je größer dieses Verhältnis, desto größer die axiale Erstreckung des zylindrischen Bereichs. Das Verhältnis f/L gleich Null ist, ist f gleich Null, d. h. ein zylindrischer Bereich konstanten Außendurchmessers ist nicht vorgesehen.

Es gilt für das Verhältnis der halben Differenz h1, h2 zwischen dem maximalen Außendurchmesser D und dem minimalen Außendurchmesser d1, d2 zum maximalen Außendurchmesser D: $0,00005 \leq h1/D \leq 0,005$ sowie $0,00005 \leq h2/D \leq 0,005$. Diese Verhältnisse bestimmen die Balligkeit der Anlagefläche 60. Dabei kann h1 gleich h2 sein. Der in der Figur 16 dargestellte Planeten-Gleitlagerstift 6 ist rotationssymmetrisch ausgebildet.

Die Figur 17 zeigt ein Ausführungsbeispiel eines Planeten-Gleitlagerstifts 6, der ein Gleitlager mit einem Planetenrad 4 mit einer Außenverzahnung 45 ausbildet. Der Planeten-Gleitlagerstift 6 ist fest mit einer Struktur verbunden, die entsprechend dem Ausführungsbeispiel der Figuren 4 und 5 aus einer vorderen Trägerplatte 810, einer hinteren Trägerplatte 820 und einem Drehmomentträger 70 besteht. Dazu umfasst der Planeten-Gleitlagerstift 6 eine erste axiale Verlängerung 67, die in der vorderen Trägerplatte 810 befestigt ist und eine zweite axiale Verlängerung 68, die in der hinteren Trägerplatte 820 befestigt ist.

Der Drehmomentträger 70 ist über Verbindungsstege 76 fest mit der vorderen Trägerplatte 810 verbunden. Insofern wird auf die Beschreibung der Figuren 4 und 5 verwiesen.

Der Planeten-Gleitlagerstift 6 besitzt eine ballig ausgebildete Anlagefläche 60. Der Planeten-Gleitlagerstift 6 weist des Weiteren eine Innenfläche 69 auf, die eine axiale Bohrung 690 begrenzt.

Die Figur 18 zeigt den Planeten-Gleitlagerstift 6 der Figur 17 in vergrößerte Darstellung, wobei die für die Ausbildung des Planeten-Gleitlagerstifts 6 relevanten Parameter dargestellt sind. In der Schnittdarstellung der Figur 18 ist dabei eine Längsachse 130 des Planeten-Gleitlagerstifts 6 erkennbar. Diese ist im Wesentlichen identisch mit der Drehachse 110 des Planetenrads 110, vgl. Figur 2, wobei jedoch die hydrodynamische Bauweise des Gleitlagers eine kleine Exzentrizität z.B. im Bereich von Zehntelmillimetern mit sich bringt.

Der Planeten-Gleitlagerstift 6 bildet wie bei der Figur 16 eine außenseitige Anlagefläche 60 aus, die ein axial vorderes Ende 65 und ein axial hinteres Ende 66 aufweist. Zwischen diesen beiden Enden 65, 66 bildet die Anlagefläche 60 eine Balligkeit in dem Sinne aus, dass ihr Außendurchmesser zu den axialen Enden 65, 66 hin abnimmt und an den axialen Enden 65, 66 ein Minimum erreicht. Die Anlagefläche 60 weist einen maximalen Außendurchmesser D auf.

Innenseitig bildet der Planeten-Gleitlagerstift 6 die Innenfläche 69 aus, die die axiale Bohrung bzw. Öffnung 690 radial außen begrenzt und eine innere Mantelfläche des Planeten-Gleitlagerstifts 6 darstellt. Die axiale Bohrung 690 weist dabei einen ersten maximalen Innendurchmesser B1 an dem axialen Ende 691 der Innenfläche 69 und einen zweiten maximalen Innendurchmesser B2 an dem axialen Ende 692 der Innenfläche 69 auf. Der axiale Abstand zwischen diesen beiden axialen Enden wird mit L bezeichnet (und ist gleich dem Abstand zwischen den axialen Enden 65, 66 der äußeren Anlagefläche 60). Zwischen den beiden axialen Enden 691, 692 weist die axiale Bohrung 690 einen minimalen Innendurchmesser A auf. Dabei kann vorgesehen sein, dass B1 gleich B2 oder alternativ dass B1 ungleich B2 ist: B1 = B2 oder B1 ≠ B2.

Die Differenz zwischen dem minimalen Innendurchmesser A und dem Innendurchmesser m an einer betrachteten axialen Position des Planeten-Gleitlagerstifts nimmt zu den axialen Enden 691, 692 stetig zu.

Der minimale Innendurchmesser A ist im Ausführungsbeispiel der Figur 18 an der axialen Mitte 95 des Planeten-Gleitlagerstifts 6 und in einem zylindrischen Bereich 695 der axialen Länge k um diese axiale Mitte 95 herum realisiert. Das Minimum des Innendurchmessers A ist somit in einem zylindrischen Bereich 695 konstanten Innendurchmessers realisiert, der sich symmetrisch zur axialen Mitte 95 über eine definierte axiale Länge k erstreckt. Dies ist allerdings nicht notwendigerweise der Fall. Alternativ wird das Minimum des Innendurchmessers A lediglich entlang einer Umfangslinie bzw. im in der Figur 18 dargestellten Längsschnitt an einem Punkt erreicht.

Der axiale Abstand zwischen dem axial vorderen Ende 691 der Innenfläche 69 zum Minimum des Innendurchmessers A oder, wenn das Minimum in einem zylindrischen Bereich ausgebildet ist, zur Mitte dieses zylindrischen Bereichs, wird in der Figur 18 als P bezeichnet. Sofern, wie in der Figur 18 dargestellt, das Minimum des Innendurchmessers A sich in der axialen Mitte 95 befindet, gibt P auch den Abstand zwischen den axialen Enden 691, 692 der Innenfläche 69 und der axialen Mitte 95 sowie den Abstand zwischen den axialen Enden 65, 66 der Außenfläche und der axialen Mitte 95 an.

Die Innenfläche 69 des Planeten-Gleitlagerstifts 6 bildet im Längsschnitt eine erste Kurve 693 aus, die sich zwischen dem zylindrischen Bereich 695 und dem vorderen axialen Ende 691 erstreckt, sowie eine zweite Kurve 694 aus, die sich zwischen dem zylindrischen Bereich 695 und dem hinteren axialen Ende 692 erstreckt. Die Form der Kurven 693, 694 kann grundsätzlich beliebig sein. Die hier dargestellte gradlinige Ausbildung ist lediglich beispielhaft zu verstehen. Alternativ können die Kurven beispielsweise kreisförmig oder parabelförmig sein.

Bei der dargestellten geradlinigen Ausbildung der Kurven 693, 694 ergibt sich eine doppelt konische Ausgestaltung der Bohrung 690 dahingehend, dass sich die Bohrung 690 von den axialen Enden (an den axialen Positionen 691, 692) zur axialen Mitte 95 des Planeten-Gleitlagerstifts 6 hin konisch verjüngt. Hierdurch wird eine symmetrisch zur axialen Mitte 95 und gleichzeitig rotationssymmetrische Ausbildung der axialen Bohrung 690 bereitgestellt, die dazu führt, dass der Planeten-Gleitlagerstift 6 in seinem mittigen Bereich eine größere Wanddicke aufweist als an den axialen Enden der Innenfläche 69.

Der Planeten-Gleitlagerstift 6 weist axiale Verlängerungen bzw. Enden 67, 68 auf, die jeweils eine vordere axialen Stirnseite 670 des Planeten-Gleitlagerstifts 6 und eine hintere axiale Stirnseite 680 des Planeten-Gleitlagerstifts bilden. Wie in Bezug auf die Figuren 2 bis 5 erläutert, ist der Planeten-Gleitlagerstift 6 an diesen Enden 67, 68 jeweils an einer Trägerplatte befestigt.

Es wird darauf hingewiesen, dass die Außenfläche 60 und die Innenfläche 69 die gleiche axiale Länge L besitzen, wobei die Punkte 65 und 691 sowie die Punkte 66 und 692 die gleiche axiale Position aufweisen. Die Außenfläche 60 und die Innenfläche 69 erstrecken sich in dem axialen Bereich, der der Bereitstellung eines Gleitlagers mit einem Planetenrad dient. Die sich axial daran anschließenden Verlängerungen 67, 68 dienen lediglich der Befestigung des Planeten-Gleitlagerstifts 6 in Trägerplatten und spielen für die hier betrachteten Formgebungen und Abmessungen keine Rolle.

Der Planeten-Gleitlagerstift 6 realisiert bestimmte Verhältnisse der wie oben definierten Parameter A, B1, B2, k, P und L.

So gilt für das Verhältnis der Länge P zur axialen Gesamtlänge L: 0 ≤ P/L ≤ 1. Dies bedeutet, dass das Minimum des Innendurchmessers A grundsätzlich an beliebiger axialer Position des Planeten-Gleitlagerstifts 6 ausgebildet sein kann. Insbesondere sind auch asymmetrische Anordnungen möglich. Auch umfasst die Offenbarung

Ausführungsvarianten, bei denen das Minimum des Innendurchmessers A an dem einen axialen Ende 691 der Anlagefläche (P=0) oder an dem anderen axialen Ende 692 der Anlagefläche (P=L) ausgebildet ist. In anderen Ausführungsvarianten befindet sich das Minimum des Innendurchmessers A stets zwischen den beiden axialen Enden 691, 692 der Anlagefläche.

Es gilt für das Verhältnis der axialen Länge des zylindrischen Bereichs k zur axialen Gesamtlänge L: $0 \leq k/L \leq 0{,}75$. Je größer dieses Verhältnis, desto größer die axiale Erstreckung des zylindrischen Bereichs 695. Wenn das Verhältnis k/L gleich Null ist, ist f gleich Null, d. h. ein zylindrischer Bereich konstanten Außendurchmessers ist dann nicht vorhanden.

Es gilt für das Verhältnis zwischen dem minimalen Innendurchmesser A und dem maximalen Innendurchmessern B1, B2: $0 \leq A/B1 \leq 0{,}99$ und $0 \leq A/B2 \leq 0{,}99$. Je näher dieses Verhältnis an 1 liegt, desto geringer die Verjüngung der axialen Bohrung 690.

Der in der Figur 18 dargestellte Planeten-Gleitlagerstift 6 ist rotationssymmetrisch ausgebildet.

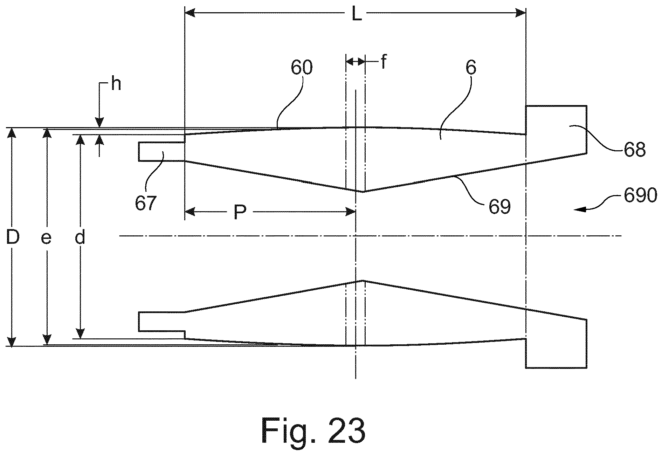

Die Figur 23 ist eine weitere vergrößerte Darstellung des Planeten-Gleitlagerstift 6 der Figur 17, wobei entsprechend der Darstellung der Figur 16 die dort angegebenen, für die Ausbildung des Planeten-Gleitlagerstifts 6 relevanten Parameter D, d, e, f, h, P und L ebenfalls dargestellt sind. Hinsichtlich der Definition dieser Parameter wird auf die Beschreibung der Figur 16 verwiesen. Anders als in der Figur 16 ist lediglich angenommen, dass der minimalen Außendurchmesser des Planeten-Gleitlagerstifts 6 an den beiden axialen Enden identisch ist, so dass dieser Parameter mit d angegeben ist (ohne die in der Figur 6 vorgenommene Differenzierung zwischen d1 und d2 und dementsprechend ebenfalls ohne die Differenzierung zwischen h1 und h2).

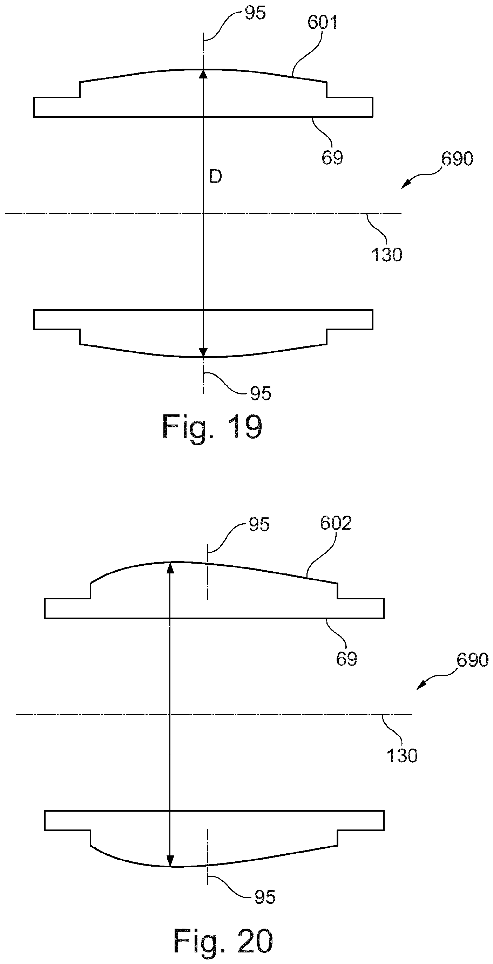

Die Figuren 19-22 zeigen jeweils in einer Schnittdarstellung verschiedene Ausgestaltungen eines Planeten-Gleitlagerstifts 6 entsprechend dem Planeten-Gleitlagerstift der Figur 16, wobei erkennbar ist, dass der Planeten-Gleitlagerstift 6 angrenzend an die Innenfläche 69 eine Öffnung 690 ausbildet, die entsprechend der Beschreibung der Figuren 2 und 3 beispielsweise der Aufnahme eines Planeten-Gleitlagerstifts dient.

Die in Bezug auf die Figur 16 erläuterten Parameter f, h, P und L sind dabei in den Figuren 19-22 unterschiedlich gewählt, wie im Folgenden ausgeführt wird.

Beim Ausführungsbeispiel der Figur 19 ist die Anlagefläche 601 ohne einen zylindrischen Bereich ausgebildet, d. h. der Parameter f ist gleich Null. Dementsprechend ist der maximale Außendurchmesser D in der axialen Mitte 95 des Planeten-Gleitlagerstifts 6 realisiert. Die beiden konvexen Kurven 63, 64 der Figur 16 bilden eine gemeinsame Kurve, die beispielsweise durch einen Kreisbogen gebildet ist.

Der Planeten-Gleitlagerstift der Figur 19 ist dabei spiegelsymmetrisch bezüglich seiner axialen Mitte 95 ausgebildet.

Beim Ausführungsbeispiel der Figur 20 ist das Maximum des Außendurchmessers D außerhalb der axialen Mitte 95 realisiert, so dass eine Asymmetrie in der Formgebung der Anlagefläche 602 realisiert ist. Ein zylindrischer Bereich ist wiederum nicht vorgesehen. In der betrachteten Schnittdarstellung bilden die beiden konvexen Kurven 63, 64 der Figur 16 eine gemeinsame Kurve 602. Diese wird beispielsweise durch einen parabelförmigen Bogen gebildet.

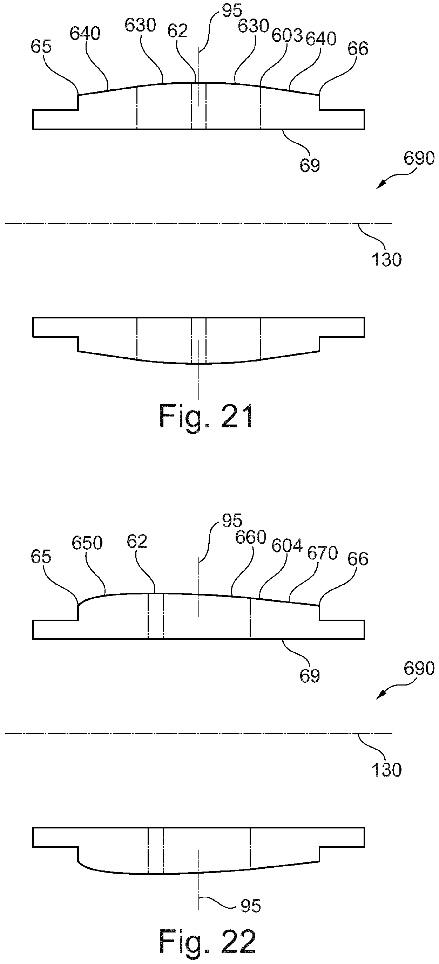

Die Figur 21 betrachtet ein Ausführungsbeispiel, bei dem die Anlagefläche 603 einen zylindrischen Bereich 62 ausbildet, in dem der Außendurchmesser D maximal ist. Dieser Bereich 62 ist mittig ausgebildet, so dass der Planeten-Gleitlagerstift 6 spiegelsymmetrisch bezüglich seiner axialen Mitte 95 ist.

Zu beiden Seiten angrenzend an den zylindrischen Bereich 62 bildet die Anlagefläche 603 Bereiche aus, die kreisförmig gebogen sind, wobei sich an diese Bereiche konisch geformte Bereiche anschließen, die sich bis zu den axialen Enden 65, 66 der Anlagefläche 603 erstrecken. In der Schnittdarstellung der Figur 21 bildet die Anlagefläche dem kreisförmig gebogenen Bereich einen Kreisbogen 630 und dem konisch geformten Bereich einen gerade Linie 640 aus, wobei letzterer bis zu den axialen Enden 65, 66 der Anlagefläche 603 verläuft.

Die Figur 22 zeigt ein Ausführungsbeispiel, bei dem das Maximum des Außendurchmessers D außerhalb der axialen Mitte 95 realisiert, so dass eine Asymmetrie in der Formgebung der Anlagefläche 604 realisiert ist. Die Anlagefläche 604 bildet dabei einen zylindrischen Bereich 62 aus, in dem der Außendurchmesser D maximal ist. Dieser Bereich 62 ist jedoch versetzt zu der axialen Mitte 95 des Planeten-Gleitlagerstifts 6 ausgebildet. Von dem zylindrischen Bereich 62 erstreckt ein parabelförmig gebogener Bereich bis zum axial vorderen Ende 65 der Anlagefläche 604, der in der Figur 22 eine parabelförmig Linie 650 bildet. Zwischen dem zylindrischen Bereich 62 und dem axial hinteren Ende 66 der Anlagefläche 604 sind zwei unterschiedlich geformte Bereiche ausgebildet, zunächst ein kreisförmig gebogener Bereich und daran anschließend und sich bis zum axialen Ende 66 erstreckender, konisch verjüngender Bereich, die in der Schnittdarstellung der Figur 22 einen Kreisbogen 660 und eine gerade Linie 670 bilden.

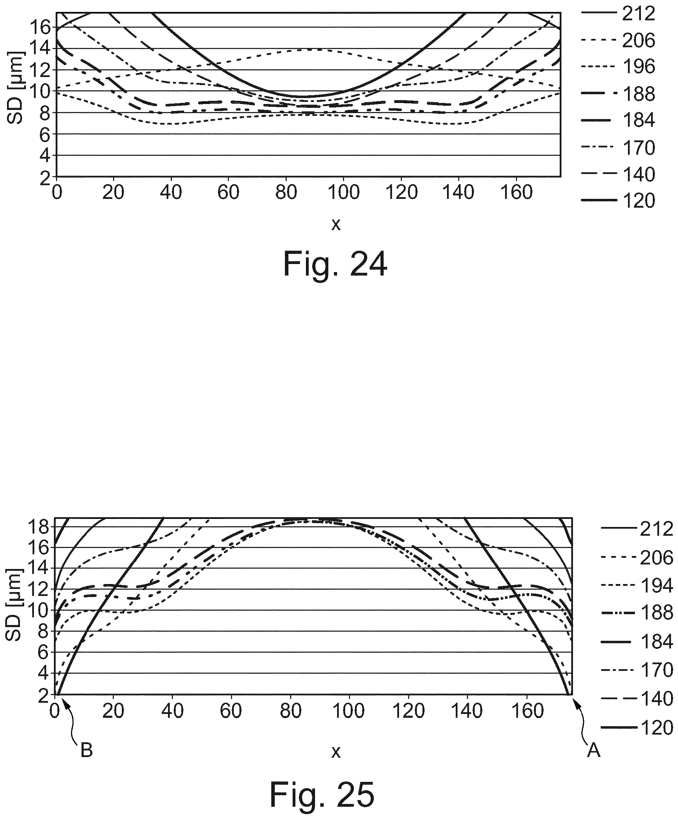

Die mit eine Balligkeit des Planeten-Gleitlagerstifts verbundenen Vorteile sind in den Figuren 24 und 25 illustriert, die jeweils die Schmierfilmdicke SD des Gleitlagers in Abhängigkeit von der axialen Position x des Gleitlagers darstellen. Die Figur 25 zeigt dabei die Verhältnisse an einem Planeten-Gleitlagerstift, der eine rein zylindrisch geformte, nicht mit einer Balligkeit versehene Außenfläche aufweist, bei 80 % Last. Es ist zu erkennen, dass die Schmierfilmdicke SD zu den axialen Enden hin stark abnimmt (vergleiche Pfeile A, B), was zu einem erhöhten Schmierfilmdruck und der Gefahr eines Metall-Metall-Kontaktes zwischen dem Planeten-Gleitlagerstift und dem Planetenrad führt.

Die Figur 24 zeigt die Schmierfilmdicke SD des Gleitlagers in Abhängigkeit von der axialen Position x des Gleitlagers für einen Planeten-Gleitlagerstift, der eine mit einer Balligkeit versehene Außenfläche aufweist, bei 100 % Last. Eine ausreichende Schmierfilmdicke ist auch an den axialen Enden gegeben.

Die vorliegende Erfindung beschränkt sich in ihrer Ausgestaltung nicht auf die vorstehend beschriebenen Ausführungsbeispiele. Insbesondere sind die beschriebenen Formgebungen des Planetenrads 4 und des Planeten-Gleitlagerstifts 6 nur beispielhaft zu verstehen.

**Patentansprüche**

1.   Planetengetriebe (100), das aufweist:

   - ein Sonnenrad (3), das um eine Drehachse (11) des Planetengetriebes (100) rotiert und von einer Sonnenwelle (30) angetrieben wird, wobei die Drehachse (11) eine axiale Richtung des Planetengetriebes (100) definiert,
   - eine Mehrzahl von Planetenrädern (4), die von dem Sonnenrad (3) angetrieben werden, wobei jedes Planetenrad (4) eine axial vordere Stirnseite (42) und eine axial hintere Stirnseite (41) aufweist,
   - ein Hohlrad (5), mit dem die Mehrzahl von Planetenrädern (4) in Eingriff steht,
   - eine Mehrzahl von Planeten-Gleitlagerstiften (6), die jeweils eine außenseitige Anlagefläche (60) aufweisen, die ein axial vorderes Ende (65) und ein axial hinteres Ende (66) aufweist,
   - wobei jeweils ein Planeten-Gleitlagerstift (6) in einem Planetenrad (4) angeordnet ist und der Planeten-Gleitlagerstift (6) und das Planetenrad (4) ein geschmiertes Gleitlager bilden, und wobei
   - die Planeten-Gleitlagerstifte (6) an ihrer Anlagefläche (60) jeweils eine Balligkeit in dem Sinne ausbilden, dass ihr Außendurchmesser (e) von einem maximalen Außendurchmesser (D) zu mindestens einem axialen Ende (65, 66) der Anlagefläche (60) hin abnimmt und an dem axialen Ende (65, 66) ein Minimum aufweist,

   **dadurch gekennzeichnet,**
   **dass** jedes Planetenrad (4) an seiner axial vorderen Stirnseite (42) und/oder an seiner axial hinteren Stirnseite (41) eine Aussparung (401) ausbildet, die sich ausgehend von der Stirnseite (41, 42) innerhalb des Planetenrads (4) erstreckt.

2.   Planetengetriebe nach Anspruch 1, **dadurch gekennzeichnet, dass** die radiale Dicke (C) der Aussparung (401) mit zunehmendem Abstand zur Stirnseite (41, 42) abnimmt.

3.   Planetengetriebe nach Anspruch 1, **dadurch gekennzeichnet, dass** das Planetenrad aufweist:

   - eine äußere Mantelfläche (43), die mindestens eine Verzahnung ausbildet,
   - eine innere Mantelfläche (44),
   - an mindestens einer Stirnseite (41, 42):

      o einen äußeren Stirnseitenbereich (411, 421), der sich an der Stirnseite (41, 42) von der Aussparung (401) bis zur äußeren Mantelfläche (43) erstreckt, wobei der äußere Stirnseitenbereich (411, 421) eine radial innere Stirnseitenkante (411b, 421b) zur Aussparung (401) und eine radial äußere Stirnseitenkante (411a, 421a) zur äußeren Mantelfläche (43) bildet,
      o einen inneren Stirnseitenbereich (412, 422), der sich an der Stirnseite (41, 42) von der Aussparung (401) bis zur inneren Mantelfläche (44) erstreckt, wobei der innere Stirnseitenbereich (412, 422) eine radial äußere Stirnseitenkante (412a, 422a) zur Aussparung (401) und eine radial innere Stirnseitenkante (412b, 422b) zur inneren Mantelfläche (44) bildet, wobei

   - die radiale Dicke (C) der Aussparung (401) an der Stirnseite (41, 42) definiert ist als der radiale Abstand zwischen der radial inneren Stirnseitenkante (411b, 421b) des äußeren Stirnseitenbereichs (411, 421) und der radial äußeren Stirnseitenkante (412a, 422a) des inneren Stirnseitenbereichs (412, 422).

4.   Planetengetriebe nach Anspruch 3, **dadurch gekennzeichnet, dass** die radial innere Begrenzung (48) der Aussparung (401) jedenfalls angrenzend an den inneren Stirnseitenbereich (412, 422) einen Winkel ($\alpha$) zur axialen Richtung bildet, der zwischen 0° und 45° liegt.

5.   Planetengetriebe nach Anspruch 3 oder 4, **dadurch gekennzeichnet, dass** die radial äußere Begrenzung (47) der Aussparung (401) jedenfalls angrenzend an den äußeren Stirnseitenbereich einen Winkel ($\beta$) zur axialen Richtung bildet, der zwischen 0° und 45° liegt.

6.   Planetengetriebe nach einer der Ansprüche 3 bis 5, **dadurch gekennzeichnet, dass**

   - die äußere Mantelfläche (43) eine axiale Länge (2*F) aufweist,
   - die innere Mantelfläche (44) eine axiale Länge (2*D) aufweist,
   - die Dicke (E) des Planetenrads definiert ist durch den radialen Abstand zwischen seiner inneren Mantelfläche (44) und der Zahnfußebene (45d) der Verzahnung (45) der äußeren Mantelfläche (43).

**7.** Planetengetriebe nach Anspruch 6, **dadurch gekennzeichnet, dass** die axiale Länge (2*F) der äußeren Mantelfläche (43) ungleich der axialen Länge (2*D) der inneren Mantelfläche (44) ist.

**8.** Planetengetriebe nach einem der vorangehenden Ansprüche, **dadurch gekennzeichnet, dass** die Aussparung (401) an ihrem im Planetenrad (4) ausgebildeten Ende (46) durch eine sich im Wesentlichen radial erstreckende Fläche gebildet ist, die durch abgerundete Ecken in eine radial äußere Begrenzung und in einer radial innere Begrenzung der Aussparung (401) übergeht.

**9.** Planetengetriebe nach einem der vorangehenden Ansprüche, **dadurch gekennzeichnet, dass** die radial äußere Begrenzung (47) und/oder die radial innere Begrenzung (48) der Aussparung (401), die sich ausgehend von der Stirnseite (41, 42) zum im Planetenrad (4) ausgebildeten Ende (46) der Aussparung (401) erstrecken, im Längsschnitt geradlinig, kreisförmig oder parabelförmig ausgebildet ist.

**10.** Planetengetriebe nach einem der vorangehenden Ansprüche, **dadurch gekennzeichnet, dass** die Aussparung (401) sich in Umfangsrichtung des Planetenrads (4) um 360° erstreckt.

**11.** Planetengetriebe nach einem der vorangehenden Ansprüche, **dadurch gekennzeichnet, dass** die Planetenräder (4) die Aussparung (401) jeweils an der axial vorderen Stirnseite (42) und an der axial hinteren Stirnseite (41) ausbilden, wobei die Aussparung (401) symmetrisch bezogen auf die axiale Mitte (120) des Planetenrads (4) ausgebildet sind.

**12.** Planetengetriebe nach einem der vorangehenden Ansprüche, **dadurch gekennzeichnet, dass** die Planetenräder (4) die Aussparung (401) jeweils an der axial vorderen Stirnseite (42) und an der axial hinteren Stirnseite (41) eine Aussparung (401) ausbilden, wobei die Aussparung (401) asymmetrisch bezogen auf die axiale Mitte (120) des Planetenrads (4) ausgebildet sind.

**13.** Planetengetriebe nach einem der vorangehenden Ansprüche, **dadurch gekennzeichnet, dass** die Planeten-Gleitlagerstifte (6) mit einem Drehmomentträger (70) gekoppelt sind und der Drehmomentträger (70) bei drehendem Sonnenrad (3) und fest angeordnetem Hohlrad (5) um die Drehachse (11) des Planetengetriebes (100) rotiert.

**14.** Planetengetriebe nach Anspruch 13, **dadurch gekennzeichnet, dass** die Planeten-Gleitlagerstifte (6) innenseitig eine axiale Öffnung (690) aufweisen und dazu ausgebildet sind, einen Trägerstift (7) des Drehmomentträgers (70) aufzunehmen, oder dass die Planeten-Gleitlagerstifte (6) fest mit einer vorderen Trägerplatte (810) und mit einer hinteren Trägerplatte (820) verbunden sind, wobei die vordere Trägerplatte (810) zur Drehmomentübertragung mit dem Drehmomentträger (70) gekoppelt ist.

**15.** Planetengetriebe nach einem der vorangehenden Ansprüche, **dadurch gekennzeichnet, dass** der Planeten-Gleitlagerstift (6) minimale Außendurchmesser (d1, d2) an den axialen Enden (65, 66) der Anlagefläche (60) und den maximalen Außendurchmesser (D) zwischen den axialen Enden (65, 66) aufweist.

**Claims**

**1.** Planetary gearbox (100) which comprises:

- a sun gear (3) which rotates about a rotational axis (11) of the planetary gearbox (100) and is driven by a sun shaft (30), the rotational axis (11) defining an axial direction of the planetary gearbox (100),
- a plurality of planetary gears (4) which are driven by the sun gear (3), each planetary gear (4) having an axially front end side (42) and an axially rear end side (41),
- an internal gear (5), with which the plurality of planetary gears (4) are in engagement,
- a plurality of planetary plain bearing pins (6) which in each case have an outer-side bearing face (60) which has an axially front end (65) and an axially rear end (66),
- in each case one planetary plain bearing pin (6) being arranged in a planetary gear (4), and the planetary plain bearing pin (6) and the planetary gear (4) forming a lubricated plain bearing, and
- the planetary plain bearing pins (6) in each case configuring a convexity on their bearing face (60), in the sense that their external diameter (e) decreases from a maximum external diameter (D) towards at least one axial end (65, 66) of the bearing face (60) and has a minimum at the axial end (65, 66),

**characterized in that**, on its axially front end side (42) and/or on its axially rear end side (41), each planetary gear (4) configures a cut-out (401) which, starting from the end side (41, 42), extends within the planetary gear (4).

**2.** Planetary gearbox according to Claim 1, **characterized in that** the radial thickness (C) of the cut-out (401) decreases at an increasing spacing from the end side (41, 42).

3. Planetary gearbox according to Claim 1, **characterized in that** the planetary gear comprises:

   - an outer lateral face (43) which configures at least one toothing system,
   - an inner lateral face (44),
   - on at least one end side (41, 42):

     o an outer end side region (411, 421) which extends on the end side (41, 42) from the cut-out (401) as far as the outer lateral face (43), the outer end side region (411, 421) forming a radially inner end side edge (411b, 421b) with respect to the cut-out (401) and a radially outer end side edge (411a, 421a) with respect to the outer lateral face (43),
     o an inner end side region (412, 422) which extends on the end side (41, 42) from the cut-out (401) as far as the inner lateral face (44), the inner end side region (412, 422) forming a radially outer end side edge (412a, 422a) with respect to the cut-out (401) and a radially inner end side edge (412b, 422b) with respect to the inner lateral face (44),

     - the radial thickness (C) of the cut-out (401) on the end side (41, 42) being defined as the radial spacing between the radially inner end side edge (411b, 421b) of the outer end side region (411, 421) and the radially outer end side edge (412a, 422a) of the inner end side region (412, 422).

4. Planetary gearbox according to Claim 3, **characterized in that** the radially inner boundary (48) of the cut-out (401) forms, at any rate adjacently with respect to the inner end side region (412, 422), an angle ($\alpha$) with respect to the axial direction, which angle ($\alpha$) lies between 0° and 45°.

5. Planetary gearbox according to Claim 3 or 4, **characterized in that** the radially outer boundary (47) of the cut-out (401) forms, at any rate adjacently with respect to the outer end side region, an angle ($\beta$) with respect to the axial direction, which angle ($\beta$) lies between 0° and 45°.

6. Planetary gearbox according to one of Claims 3 to 5, **characterized in that**

   - the outer lateral face (43) has an axial length (2*F),
   - the inner lateral face (44) has an axial length (2*D),
   - the thickness (D) of the planetary gear is defined by the radial spacing between its inner lateral face (44) and the tooth root plane (45d) of the toothing system (45) of the outer lateral face (43).

7. Planetary gearbox according to Claim 6, **characterized in that** the axial length (2*F) of the outer lateral face (43) does not equal the axial length (2*D) of the inner lateral face (44).

8. Planetary gearbox according to one of the preceding claims, **characterized in that**, at its end (46) which is configured in the planetary gear (4), the cut-out (401) is formed by way of a substantially radially extending face which merges by way of rounded corners into a radially outer boundary and into a radially inner boundary of the cut-out (401).

9. Planetary gearbox according to one of the preceding claims, **characterized in that** the radially outer boundary (47) and/or the radially inner boundary (48) of the cut-out (401), which, starting from the end side (41, 42) extend to that end (46) of the cut-out (401) which is configured in the planetary gear (4), are/is of rectilinear, circular or parabolic configuration in longitudinal section.

10. Planetary gearbox according to one of the preceding claims, **characterized in that** the cut-out (401) extends in the circumferential direction of the planetary gear (4) by 360°.

11. Planetary gearbox according to one of the preceding claims, **characterized in that** the planetary gears (4) configure the cut-out (401) in each case on the axially front end side (42) and on the axially rear end side (41), the cut-out (401) being of symmetrical configuration in relation to the axial centre (120) of the planetary gear (4).

12. Planetary gearbox according to one of the preceding claims, **characterized in that** the planetary gears (4) configure the cut-out (401) in each case on the axially front end side (42) and on the axially rear end side (41) a cut-out (401), the cut-out (401) being of asymmetrical configuration in relation to the axial centre (120) of the planetary gear (4).

13. Planetary gearbox according to one of the preceding claims, **characterized in that** the planetary plain bearing pins (6) are coupled to a torque support (70), and the torque support (70) rotates about the rotational axis (11) of the planetary gearbox (100) in the case of a rotating sun gear (3) and a fixedly arranged internal gear (5).

14. Planetary gearbox according to Claim 13, **characterized in that**, on the inner side, the planetary plain bearing pins (6) have an axial opening (690) and are configured to receive a support pin (7) of the torque support (70), or **in that** the planetary plain bearing pins (6) are connected fixedly to a front carrier plate (810) and to a rear carrier plate (820), the front carrier plate (810) being coupled to the torque support (70) for the transmission of torque.

15. Planetary gearbox according to one of the preceding claims, **characterized in that** the planetary plain bearing pin (6) has minimum external diameters (d1, d2) at the axial ends (65, 66) of the bearing face (60) and the maximum external diameter (D) between the axial ends (65, 66).

**Revendications**

1. Train épicycloïdal (100), qui comprend :

- une roue planétaire (3), qui tourne autour d'un axe de rotation (11) du train épicycloïdal (100) et est entraînée par un arbre planétaire (30), l'axe de rotation (11) définissant une direction axiale du train épicycloïdal (100),
- une pluralité de roues satellites (4), qui sont entraînées par la roue planétaire (3), chaque roue satellite (4) comprenant un côté frontal axialement avant (42) et un côté frontal axialement arrière (41),
- une couronne (5), avec laquelle la pluralité de roues satellites (4) s'engrène,
- une pluralité de broches à paliers lisses de satellites (6), qui comprennent respectivement une surface d'appui extérieure (60), qui comprend une extrémité axialement avant (65) et une extrémité axialement arrière (66),
- une broche à palier lisse de satellite (6) étant disposée respectivement dans une roue satellite (4) et la broche à palier lisse de satellite (6) et la roue satellite (4) formant un palier lisse lubrifié, et
- les broches à paliers lisses de satellites (6) formant, au niveau de leur surface d'appui (60), respectivement un bombement au sens que leur diamètre extérieur (e) diminue à partir d'un diamètre extérieur maximal (D) vers au moins une extrémité axiale (65, 66) de la surface d'appui (60) et présente un minimum à l'extrémité axiale (65, 66),

**caractérisé en ce que**
chaque roue satellite (4) forme, au niveau de son côté frontal axialement avant (42) et/ou au niveau de son côté frontal axialement arrière (41), un évidement (401) qui s'étend à partir du côté frontal (41, 42) à l'intérieur de la roue satellite (4).

2. Train épicycloïdal selon la revendication 1, **caractérisé en ce que** l'épaisseur radiale (C) de l'évidement (401) diminue au fur et à mesure que la distance au côté frontal (41, 42) augmente.

3. Train épicycloïdal selon la revendication 1, **caractérisé en ce que** la roue satellite comprend :

- une surface d'enveloppe extérieure (43), qui forme au moins une denture,
- une surface d'enveloppe intérieure (44),
- au niveau d'au moins un côté frontal (41, 42) :

o une région latérale frontale extérieure (411, 421), qui s'étend au niveau du côté frontal (41, 42) à partir de l'évidement (401) jusqu'à la surface d'enveloppe extérieure (43), la région latérale frontale extérieure (411, 421) formant une arête de côté frontal (411b, 421b) radialement intérieure par rapport à l'évidement (401) et une arête de côté frontal (411a, 421a) radialement extérieure par rapport à la surface d'enveloppe extérieure (43),
o une région latérale frontale intérieure (412, 422), qui s'étend au niveau du côté frontal (41, 42) à partir de l'évidement (401) jusqu'à la surface d'enveloppe intérieure (44), la région latérale frontale intérieure (412, 422) formant une arête de côté frontal (412a, 422a) radialement extérieure par rapport à l'évidement (401) et une arête de côté frontal (412b, 422b) radialement intérieure par rapport à la surface d'enveloppe intérieure (44),
o l'épaisseur radiale (C) de l'évidement (401) au niveau du côté frontal (41, 42) étant définie comme la distance radiale entre l'arête de côté frontal (411b, 421b) radialement intérieure de la région latérale frontale extérieure (411, 421) et l'arête de côté frontal (412a, 422a) radialement extérieure de la région latérale frontale intérieure (412, 422) .

4. Train épicycloïdal selon la revendication 3, **caractérisé en ce que** la limite radialement intérieure (48) de l'évidement (401) forme en tout cas, de manière adjacente à la région latérale frontale intérieure (412, 422), un angle ($\alpha$) par rapport à la direction axiale, lequel est compris entre 0° et 45°.

5. Train épicycloïdal selon la revendication 3 ou 4, **caractérisé en ce que** la limite radialement extérieure (47) de l'évidement (401) forme en tout cas, de manière adjacente à la région latérale frontale extérieure, un angle ($\beta$) par rapport à la direction axiale, lequel est compris entre 0° et 45°.

**6.** Train épicycloïdal selon l'une des revendications 3 à 5, **caractérisé en ce que**

- la surface d'enveloppe extérieure (43) présente une longueur axiale (2*F),
- la surface d'enveloppe intérieure (44) présente une longueur axiale (2*D),
- l'épaisseur (E) de la roue satellite est définie par la distance radiale entre sa surface d'enveloppe intérieure (44) et le plan de pied de dent (45d) de la denture (45) de la surface d'enveloppe extérieure (43).

**7.** Train épicycloïdal selon la revendication 6, **caractérisé en ce que** la longueur axiale (2*F) de la surface d'enveloppe extérieure (43) est différente de la longueur axiale (2*D) de la surface d'enveloppe intérieure (44).

**8.** Train épicycloïdal selon l'une des revendications précédentes, **caractérisé en ce que** l'évidement (401) est formé, à son extrémité (46) formée dans la roue satellite (4), par une surface s'étendant sensiblement radialement qui se prolonge, par des coins arrondis, dans une limite radialement extérieure et dans une limite radialement intérieure de l'évidement (401).

**9.** Train épicycloïdal selon l'une des revendications précédentes, **caractérisé en ce que** la limite radialement extérieure (47) et/ou la limite radialement intérieure (48) de l'évidement (401), qui s'étendent à partir du côté frontal (41, 42) jusqu'à l'extrémité (46) de l'évidement (401) formée dans la roue satellite (4), sont réalisées de manière rectiligne, circulaire ou parabolique en coupe longitudinale.

**10.** Train épicycloïdal selon l'une des revendications précédentes, **caractérisé en ce que** l'évidement (401) s'étend sur 360° dans la direction périphérique de la roue satellite (4) .

**11.** Train épicycloïdal selon l'une des revendications précédentes, **caractérisé en ce que** les roues satellites (4) forment l'évidement (401) respectivement au niveau du côté frontal axialement avant (42) et au niveau du côté frontal axialement arrière (41), l'évidement (401) étant formé symétriquement par rapport au centre axial (120) de la roue satellite (4).

**12.** Train épicycloïdal selon l'une des revendications précédentes, **caractérisé en ce que** les roues satellites (4) forment l'évidement (401) respectivement au niveau du côté frontal axialement avant (42) et au niveau du côté frontal axialement arrière (41) un évidement (401), l'évidement (401) étant formé asymétriquement par rapport au centre axial (120) de la roue satellite (4).

**13.** Train épicycloïdal selon l'une des revendications précédentes, **caractérisé en ce que** les broches à paliers lisses de satellites (6) sont accouplées à un support de couple (70) et le support de couple (70) tourne autour de l'axe de rotation (11) du train épicycloïdal (100) lorsque la roue planétaire (3) tourne et que la couronne (5) est disposée fixement.

**14.** Train épicycloïdal selon la revendication 13, **caractérisé en ce que** les broches à paliers lisses de satellites (6) présentent une ouverture axiale (690) du côté intérieur et sont formées pour recevoir une broche de support (7) du support de couple (70), ou **en ce que** les broches à paliers lisses de satellites (6) sont reliées fixement à une plaque de support avant (810) et à une plaque de support arrière (820), la plaque de support avant (810) étant accouplée au support de couple (70) pour la transmission de couple.

**15.** Train épicycloïdal selon l'une des revendications précédentes, **caractérisé en ce que** la broche à palier lisse de satellite (6) présente des diamètres extérieurs minimaux (d1, d2) aux extrémités axiales (65, 66) de la surface d'appui (60) et le diamètre extérieur maximal (D) entre les extrémités axiales (65, 66).

Fig. 1

Fig. 2

EP 3 489 548 B1

**Fig. 3**

Fig. 4

Fig. 5

Fig. 6

EP 3 489 548 B1

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20150300255 A1

- DE 102015221633 A1